(19) Europäisches Patentamt
European Patent Office
Office européen des brevets

(11) **EP 3 763 775 B1**

(12) **FASCICULE DE BREVET EUROPEEN**

(45) Date de publication et mention
de la délivrance du brevet:
**01.09.2021  Bulletin 2021/35**

(51) Int Cl.:
**C08J 5/24** *(2006.01)*        **C08J 5/04** *(2006.01)*
**B29B 15/12** *(2006.01)*

(21) Numéro de dépôt: **20184485.9**

(22) Date de dépôt: **07.07.2020**

(54) **PROCEDE DE PREPARATION D'UN MATERIAU FIBREUX IMPREGNE PAR PULTRUSION REACTIVE**

VERFAHREN ZUR VORBEREITUNG EINES FASERIGEN MATERIALS, DAS DURCH REAKTIVE PULTRUSION IMPRÄGNIERT WURDE

METHOD FOR PREPARING A FIBROUS MATERIAL IMPREGNATED BY REACTIVE PULTRUSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2019  FR 1907685**

(43) Date de publication de la demande:
**13.01.2021  Bulletin 2021/02**

(73) Titulaire: **ARKEMA FRANCE**
**92700 Colombes (FR)**

(72) Inventeurs:
• **DEYRAIL, Yves**
  **27470 SERQUIGNY (FR)**
• **HOCHSTETTER, Gilles**
  **92705 COLOMBES CEDEX (FR)**
• **BOUCHERES, Thomas**
  **69493 PIERRE-BENITE Cedex (FR)**
• **CAUSIER, Adrian**
  **27470 SERQUIGNY (FR)**

(56) Documents cités:
**WO-A1-2009/045190        WO-A1-2013/086258**
**US-A- 3 940 464          US-A1- 2007 113 983**
**US-A1- 2007 227 646**

## Description

[Domaine technique]

La présente invention concerne un procédé de préparation d'un matériau fibreux imprégné d'un polymère thermoplastique par pultrusion réactive, les rubans obtenus par le procédé et leur utilisation.

[Technique antérieure]

En pultrusion thermoplastique traditionnelle, la résine d'imprégnation est un polymère pas ou peu réactif de viscosité suffisamment faible (< 100 Pa.s) pour pouvoir imprégner les mèches de fibres (rovings) à une vitesse de ligne comprise entre 0,2 à 1m/min tout en gardant une longueur de tête raisonnable de manière à limiter la surface de friction sur les rovings ainsi que le coût d'usinage. L'imprégnation d'un roving peut être caractérisée par un temps de diffusion de la résine au cœur du roving. Ce temps de diffusion est fonction de plusieurs facteurs tels que la viscosité du polymère thermoplastique, la vitesse de la ligne et l'épaisseur du roving.

Dans les techniques d'imprégnation, l'utilisation d'embarrages est connue pour réduire le temps de diffusion de la résine au travers du roving et pour homogénéiser la répartition des fibres en passant d'un roving de section circulaire à une section rectangulaire de ratio largeur/épaisseur très élevé (grande largeur, faible épaisseur).

Cette opération est réalisée en faisant circuler le roving alternativement au-dessus et au-dessous d'une série de surface de contact en appliquant une tension sur le roving. Les embarrages peuvent être en amont de la filière et/ou à l'intérieur de la filière. Les embarrages en amont ont pour rôle d'épanouir le roving et les embarrages à l'intérieur de la filière permettent de générer une zone de contact roving/solide.

Ainsi, la demande internationale WO2013086258 décrit l'imprégnation d'un matériau fibreux par un polymère thermoplastique non réactif en faisant passer une mèche ou roving à travers une zone d'imprégnation dans la tête de pultrusion dans un canal dans lequel le polymère thermoplastique est injecté à l'entrée du canal sur une des surfaces de ladite mèche pour obtenir un matériau fibreux imprégné asymétrique, c'est-à-dire que le matériau fibreux imprégné présente une portion riche en fibre et une portion riche en polymère thermoplastique dans le sens de l'épaisseur.

Chaque canal présent dans la tête de pultrusion est équipé de plusieurs surfaces de contact permettant le frottement de la mèche de manière à réduire le temps de diffusion du polymère thermoplastique au travers du roving.

La force de tension maximum que les mèches peuvent supporter est comprise de 1000 à 15000 MPa pour des mèches ayant une masse par unité de longueur comprise de 0,05 à 2g/m. La viscosité à l'état fondu du polymère thermoplastique utilisé est comprise de 25 à 50000 Pa.s. Il est bien entendu par l'homme du métier que des viscosités aussi hautes ne permettent pas d'imprégner en des temps suffisamment rapides et/ou sur des épaisseurs suffisamment importantes pour présenter un quelconque intérêt du point de vue industriel.

Si on considère un roving qui passe au travers de la tête d'imprégnation dans un canal, ce roving, à tout instant de son parcours, est englobé dans le volume du canal, composé du volume du roving et d'un volume libre. Sans ce volume libre, la fibre occuperait tout le volume du canal, conduisant à une friction très importante sur les parois et la rupture prématurée des rovings. C'est donc ce volume libre, nécessaire au procédé, qui génère un temps de séjour de la résine dans la tête mais ledit temps de séjour doit être limité au maximum tout en permettant toujours la diffusion du polymère thermoplastique dans le roving et ne pas avoir une viscosification trop importante de la résine avant imprégnation qui empêcherait l'imprégnation ou bloquerait la tête de pultrusion.

Par ailleurs, lorsqu'un mélange de prépolymères est utilisé pour la polymérisation, ces derniers doivent être suffisamment fluides pour pouvoir imprégner les fibres avec ce mélange réactif. Il faut par conséquent chauffer à haute température pour effectuer l'imprégnation, notamment lorsque la Tg des prépolymères est élevée, mais alors la réaction de polymérisation devient alors trop rapide et la viscosification empêche l'imprégnation correcte des fibres.

[Résumé de l'invention]

L'invention concerne donc un procédé de fabrication d'au moins un matériau fibreux imprégné comprenant un matériau fibreux en fibres continues et au moins un polymère thermoplastique de température de transition vitreuse Tg supérieure ou égale à 40°C, en particulier supérieure ou égale à 80°C, de préférence comprise de 100 à 200°C, plus préférentiellement comprise de 110 à 200°C, ou une température de fusion Tf inférieure ou égale à 400°C, en particulier inférieure ou égale à 350°C, notamment inférieure ou égale à 290°C,

caractérisé en ce que ledit procédé comprend une étape d'imprégnation dans une tête de pultrusion dudit au moins un matériau fibreux par injection d'une composition réactive à l'état fondu comprenant au moins un précurseur dudit polymère thermoplastique en présence dudit matériau fibreux,

ledit au moins un matériau fibreux étant lors de son entrée dans ladite tête de pultrusion divisé dans son épaisseur en n couches, en particulier d'épaisseurs sensiblement égales, n étant compris de 2 à 20, en particulier de 2 à 10, plus particulièrement de 2 à 5, notamment égal à 4,

chaque couche circulant dans ladite tête de pultrusion dans un canal qui lui est propre,

l'injection de ladite composition réactive étant effectuée dans chaque canal et/ou entre lesdites couches lors de leur réunification à la sortie de chaque canal,

ledit canal étant chauffé à une température telle que la composition réactive présente une viscosité initiale à l'état fondu inférieure à 50 Pa.s, plus préférentiellement inférieure à 20 Pa.s, encore plus préférentiellement inférieure à 10 Pa.s, notamment inférieure à 5 Pa.s, l'imprégnation débutant au moment de l'injection et se terminant avant ou après la réunification desdites couches par superposition pour former ledit au moins un matériau fibreux final imprégné dans lequel lesdits précurseurs dudit polymère thermoplastique sont au moins partiellement polymérisés.

Les Inventeurs ont trouvé de manière inattendue que diviser l'épaisseur d'un matériau fibreux à imprégner par une composition réactive, en plusieurs couches, notamment d'épaisseur sensiblement égales, chaque couche circulant dans un canal chauffé à une température telle que la composition réactive qui comprend des précurseurs (dénommés aussi oligomères réactifs ou encore dénommés prépolymères réactifs) de faible viscosité de départ ou initiale à l'état fondu (< 50 Pa.s) et qui va imprégner lesdites couches permettait de réduire au minimum le temps de diffusion de la composition réactive dans lesdites couches et donc d'imprégner lesdites couches avant ou après leur réunification tout en effectuant la polymérisation au moins de manière partielle.

En d'autres termes, le procédé de l'invention permet d'assurer la double contrainte qui est de remonter suffisamment la viscosité initiale pour avoir des masses molaires (Mn) du polymère suffisamment hautes de manière à avoir une bonne tenue mécanique et de « maitriser » cette remontée en viscosité/masse de manière à assurer l'imprégnation avant que la viscosité ne devienne trop importante.

Ce procédé permet également de réduire au maximum le volume mort dans chaque canal.

Ce procédé permet donc d'atteindre des vitesses de ligne supérieures à 1 m/min et ainsi réduire significativement les coûts de fabrication des profilés pultrudés.

De plus, la réactivité des oligomères permet, après polymérisation complète, d'atteindre des propriétés mécaniques bien supérieures à ce qui est obtenu en pultrusion traditionnelle, à qualité d'imprégnation équivalente.

La température de transition vitreuse Tg et la température de fusion Tf sont mesurées en DSC selon la norme ISO 11357-2: 2013 et ISO 11357-3 : 2013.

La viscosité à l'état fondu est mesurée par rhéologie oscillatoire à une température $Tf \leq T \leq Tf +50°C$ pour un polymère semi-cristallin ou $Tg + 220°C$ pour un polymère amorphe, à 10 rad/sec sous balayage d'azote avec 5% de déformation sur un appareil Physica MCR301 entre deux plans parallèles de 25 mm de diamètre.

Un polymère semi-cristallin, au sens de l'invention, désigne un polymère qui présente une température de fusion (Tf) en DSC selon la norme ISO 11357-3 :2013, et une enthalpie de cristallisation lors de l'étape de refroidissement à une vitesse de 20K/min en DSC mesurée selon la norme ISO 11357-3 de 2013 supérieure ou égale à 30 J/g, de préférence supérieure ou égale à 35 J/g.

Un polymère amorphe, au sens de l'invention, désigne un polymère présentant seulement une température de transition vitreuse (pas de température de fusion (Tf)) en DSC selon la norme ISO 11357-2 :2013, ou un polyamide très peu cristallin ayant une température de transition vitreuse en DSC selon la norme ISO 11357-2 :2013 et un point de fusion tel que l'enthalpie de cristallisation lors de l'étape de refroidissement à une vitesse de 20K/min en analyse calorimétrique différentielle (« Differential Scanning Calorimetry » DSC en anglais) mesurée selon la norme ISO 11357-3 :2013 est inférieure à 30 J/g, notamment inférieure à 20 J/g, de préférence inférieure à 15 J/g.

L'expression « d'épaisseurs sensiblement égale » signifie que chaque couche après séparation du matériau fibreux (ou mèche) présente une épaisseur e $\pm$ 25%, en particulier $\pm$ 12%.

Chaque couche circule dans un canal qui lui est propre, il n'y a donc qu'une couche par canal et il ne peut donc y avoir deux ou plusieurs couches par canal.

S'agissant de la composition réactive :

L'expression « composition réactive » signifie que le poids moléculaire de ladite composition réactive (ou sa viscosité à l'état fondu) va évoluer durant la mise en œuvre par réaction de prépolymères (ou oligomères) réactifs sur eux-mêmes ou entre eux par condensation ou avec un allongeur de chaîne par polyaddition et sans élimination de sous-produits volatils pour conduire après polymérisation ou par substitution nucleophile complète au polymère polyamide final de la matrice thermoplastique.

Dans le cas des compositions réactives de l'invention, lesdits prépolymères réactifs sont préparés par réaction classique de polycondensation entre les composants diamines et diacides correspondants et éventuellement aminoacides ou lactames. Les prépolymères portant des fonctions X et Y amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X et une Y est, par exemple, en associant un prépolymère portant 2 fonctions identiques X = amine, avec un prépolymère diacide porteur de Y= carboxy, avec un taux molaire global en fonctions acides égal à celui des fonctions amines X de départ.

Pour l'obtention de prépolymères fonctionnalisés avec des fonctions identiques (amines ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Selon une première possibilité, ledit au moins prépolymère thermoplastique réactif partiellement polymérisé comprend au moins un prépolymère (notamment polyamide) réactif porteur sur la même chaîne (c'est-à-dire sur le même prépolymère), de deux fonctions terminales X' et Y' fonctions respectivement coréactives entre elles par condensation, avec X' et Y' étant amine et carboxy ou carboxy et amine respectivement.

Avantageusement, ledit au moins prépolymère thermoplastique réactif partiellement polymérisé est constitué d'au moins un prépolymère (notamment polyamide) réactif porteur sur la même chaîne (c'est-à-dire sur le même prépolymère), de deux fonctions terminales X' et Y' fonctions respectivement coréactives entre elles par condensation, avec X' et Y' étant amine et carboxy ou carboxy et amine respectivement.

Il n'y a donc pas de présence d'allongeur de chaîne dans ce premier mode de réalisation.

Selon une deuxième possibilité, ledit au moins prépolymère thermoplastique réactif partiellement polymérisé comprend au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement. Avantageusement, ledit au moins prépolymère thermoplastique réactif partiellement polymérisé est constitué d'au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Les au moins deux prépolymères peuvent être mélangés ensembles ou non au préalable.

Cette réaction de condensation (ou de polycondensation) peut provoquer l'apparition de sous-produits.

Il n'y a donc pas de présence d'allongeur de chaîne dans ce deuxième mode de réalisation.

La réaction des deux prépolymères peut être totale ou partielle.

Selon une troisième possibilité, ledit au moins prépolymère thermoplastique réactif partiellement polymérisé avec l'allongeur de chaîne comprend :

a1) au moins un prépolymère thermoplastique réactif comme déjà défini ci-haut avec ce prépolymère porteur de n fonctions réactives terminales X, identiques choisies parmi : -NH2 (amine), - CO2H (carboxy) et -OH (hydroxyle), de préférence -NH2 (amine) et -CO2H (carboxy), avec n étant 1 à 3, de préférence de 1 à 2, plus préférentiellement 1 ou 2, plus particulièrement 2

a2) au moins un allongeur de chaîne Y-A'-Y, avec A' étant un biradical hydrocarboné, porteur de 2 fonctions réactives terminales Y identiques, réactives par polyaddition (sans élimination de sous-produit de réaction), avec au moins une fonction X dudit prépolymère a1), de préférence de masse moléculaire inférieure à 500 et plus préférentiellement inférieure à 400.

Avantageusement, ledit au moins prépolymère thermoplastique réactif partiellement polymérisé avec l'allongeur de chaîne est constitué de a1) et a2) ci-dessus définis.

Avantageusement, Y est choisi parmi: oxazine, oxazoline, oxazolinone, oxazinone, imidazoline, époxy, isocyanate, maléimide, anhydride cyclique, notamment oxazine, oxazoline, oxazolinone, oxazinone, imidazoline, maléimide, anhydride cyclique et préférentiellement X1 est CO2H et Y1 est choisi parmi un epoxy et une oxazoline.

NH2 (amine) signifie amine primaire et secondaire.

Comme exemples convenables d'allongeurs a2) en fonction des fonctions X portées par ledit prépolymère polyamide semi-cristallin a1), on peut citer les suivants :

- lorsque X est NH2 ou OH de préférence NH2 :

soit l'allongeur de chaîne Y-A'-Y correspond à
Y choisi parmi les groupements : maléimide, isocyanate éventuellement bloqué, oxazinone et oxazolinone, anhydride cyclique, de préférence oxazinone et oxazolinone, en particulier maléimide, oxazinone et oxazolinone, anhydride cyclique, de préférence oxazinone et oxazolinone
et
A' est un espaceur ou un radical carboné portant les fonctions ou groupements réactifs Y, choisi parmi: une liaison covalente entre deux fonctions (groupements) Y dans le cas où Y = oxazinone et oxazolinone ou une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 200 g.mol-1

soit l'allongeur de chaîne Y-A'-Y correspond à Y étant un groupement caprolactame et à A' pouvant être un radical carbonyle tel que le carbonyl biscaprolactame ou à A' pouvant être un téréphtaloyle ou un isophtaloyle, soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
et

- lorsque X est COOH :
ledit allongeur de chaîne Y-A'-Y correspond à :

Y choisi parmi les groupements : oxazoline, oxazine, imidazoline ou aziridine, comme le 1, 1'-iso- ou téré-phtaloyl-bis (2-methyl aziridine) ou epoxy,
A' étant un espaceur ou un radical carboné tel que défini ci-dessus.

Plus particulièrement, quand dans ledit allongeur Y-A'-Y, ladite fonction Y est choisie parmi oxazinone, oxazolinone, oxazine, oxazoline ou imidazoline, en particulier oxazoline, dans ce cas, dans l'allongeur de chaîne représenté par Y-A'-Y, A' peut représenter un alkylène tel que -(CH2)m- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.
Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en œuvre à l'état fondu.
Dans le cas où Y est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges. Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en œuvre à l'état fondu.
Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.
De même, dans le cas où l'allongeur est un dianhydride réagissant avec un prépolymère P(X)n où X = NH2, les conditions préférées évitent toute formation de cycle imide lors de la polymérisation et lors la mise en œuvre à l'état fondu.
Pour X = OH ou NH2, le groupement Y est choisi de préférence parmi : isocyanate (non bloqué), oxazinone et oxazolinone, plus préférentiellement oxazinone et oxazolinone, avec comme espaceur ou radical hydrocarboné A' étant comme défini ci-haut.
Comme exemples d'allongeurs de chaîne portant des fonctions réactives Y oxazoline ou oxazine convenables à la mise en œuvre de l'invention, on pourra se référer à ceux décrits sous références « A », « B », « C » et « D » à la page 7 de la demande EP 0 581 642, ainsi qu'à leurs procédés de préparation et leusr modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas ou X = CO2H et l'allongeur de chaîne Y-A'-Y est la 1,4-phénylène bisoxazoline, le produit de réaction obtenu possède au moins un motif récurrent de structure suivante:

-O-C(O)-P-C(O)-O-R1-N H-C(O)-A'-C(O)-N H-R1-

dans laquelle :

P est un polyamide à terminaisons acides HO-C(O)-P-C(O)-OH obtenu à partir des motifs amides (A), (B) ou (C),
R1 (CH2)2, et
A' est un phényle.

Comme exemples d'allongeurs de chaîne à fonction réactive Y imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis-(benzoxazinone), bisoxazinone et bisoxazolinone. A' peut être également un alkylène en C1 à C14, de préférence en C2 à C10 mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C1 à C14, de préférence en C2 à C10. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre ledit prépolymère P(X)n et ledit allongeur Y-A'-Y à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que - (CH2)m- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a de préférence une masse moléculaire inférieure à 500, plus préférentiellement inférieure à 400.

Le taux dedit allongeur utilisé varie de 1 à 20%, en particulier de 5 à 20%, notamment de 10 à 20% en poids.

Dans le cas des compositions réactives de l'invention selon définition a), lesdits prépolymères réactifs sont préparés par réaction classique de polycondensation entre les composants diamines et diacides correspondants et éventuellement aminoacides ou lactames. Les prépolymères portant des fonctions X' et Y' amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxy, avec un taux molaire global en fonctions acides égal à celui des fonctions amines X' de départ.

Pour l'obtention de prépolymères fonctionnalisés avec des fonctions identiques (amines ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Dans le cas d'un prépolymère P(X1)n avec n fonctions X1 identiques, la fonctionnalité 1 peut être obtenue en présence d'un composant monofonctionnel bloquant (monoacide ou monoamine en fonction de la nature de X1= amine ou carboxy).

Une fonctionnalité n = 2 peut être obtenue à partir de composants difonctionnels : diamines et diacides avec excès de l'un pour fixer X1 en fonction de cet excès.

Pour n = 3 par exemple, pour un prépolymère P(X1)n, il faut la présence d'un composant trifonctionnel, par exemple présence d'une triamine (une mole par chaîne de prépolymère) avec une diamine dans la réaction avec un diacide. La fonctionnalité préférée pour P(X1)n est n = 2.

De manière facultative, le prépolymère thermoplastique ou mélange de prépolymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent de faciliter la fusion de la matrice prépolymère lorsqu'elle est chauffée.

La masse moléculaire moyenne en nombre Mn dudit polymère thermoplastique final, c'est-à-dire après polymérisation complète, est de préférence dans une plage allant de 10000 à 40000, de préférence de 12000 à 30000 déterminée en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères précurseurs ont une masse moléculaire moyenne en nombre Mn allant de 500 à 10000, de préférence de 1000 à 6000, en particulier de 2500 à 6000.

Dans un mode de réalisation, ladite composition réactive comprend ou est constitué de :

- 50 à 100% en poids d'au moins un précurseur dudit polymère thermoplastique,
- 0 à 50% en poids d'au moins un additif et/ou d'au moins un autre polymère thermoplastique,

Les additifs peuvent être choisis parmi, sans être limités à ceux-ci, des additifs spécifiques pouvant absorber à la longueur d'onde d'un laser, comme par exemple un laser UV ou IR, ceci permettant l'utilisation de la technologie de placement automatique des fibres (AFP), dans le cas où celle-ci utilise un mode de chauffage laser, pour souder les rubans composites entre eux, ceci notamment dans le cas de rubans composites à base de fibres de verre ou de carbone. D'autres additifs comme les stabilisants thermiques peuvent être ajoutés à la composition précurseur et donc être présents dans le matériau composite thermoplastique final tel qu'utilisé dans les pièces d'application finale, en particulier ces stabilisants étant des antioxydants, contre la thermo-oxydation et/ou la photo-oxydation du polymère de la matrice thermoplastique. Lesdits antioxydants sont de type phénolique stériquement encombré et/ou amine stériquement encombrée (connues sous le nom courant HALS). Comme exemple convenable de tels additifs, on peut citer : le noir de carbone (NC) sous forme de poudre de NC ou de préférence sous forme de mélanges maîtres à base de NC et de polyéthylène (PE) ou de NC et de polyamide (PA), $TiO_2$ (oxyde de titane), ZnO (oxyde de zinc) et dans le cas d'un laser IR, l'oxyde d'étain indium, (Indium Tin Oxide, commercialisé par Evonik) et les stabilisants thermiques tels que cités ci-haut. Comme exemple de mélange maître NC + PE avec environ 40% de NC, on peut citer l'EUTHYLEN® commercialisé par BASF. Comme exemple de mélange maître NC + PA avec environ 15% de NC, on peut citer RENOL® BLACK commercialisé par CLARIANCE.

Les additifs peuvent également être des charges qui, en plus des fibres de renfort longues, peuvent être notamment toute charge connue de l'homme du métier dans le domaine des composites. Il peut notamment s'agir de charges conductrices de la chaleur et/ou conductrices de l'électricité, telles que de la poudre de métal, du noir de carbone pulvérulent, des fibrilles de carbone, des nanotubes de carbone (NTC), de carbure de silicium, de carbonitrure de bore, de nitrure de bore ou de silicium. On pourra se reporter à ce sujet à la demande WO 2010/130930 de la Demanderesse.

Il est bien évident que les fibres de renfort longues (ou renforts fibreux longs) sont exclues des additifs. Les additifs peuvent être aussi des agents ignifugeants, tels qu'un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique.

L'expression « autres polymères » désigne tout polymère thermoplastique non réactif et notamment un polymère polyamide, notamment un polyamide aliphatique, cycloaliphatique ou aromatique, et qui peut être semi-cristallin ou amorphe.

Par polymère thermoplastique non réactif, il faut entendre un polymère dont le poids moléculaire n'est plus susceptible d'évoluer significativement, c'est-à-dire que sa masse moléculaire en nombre (Mn) évolue de moins de 50% lors de sa mise en œuvre.

S'agissant de l'injection

L'injection de ladite composition réactive est effectuée dans chaque canal, à une position qui peut être à l'entrée de chaque canal, à la sortie de chaque canal ou entre l'entrée et la sortie de chaque canal (dans ce dernier cas, il peut y avoir un ou plusieurs points d'injection) et/ou entre lesdites couches lors de leur sortie de chaque canal.

Dans une première variante, l'injection est effectuée entre lesdites couches lors de leur sortie de chaque canal.

Avantageusement, dans ce mode de réalisation, l'injection de ladite composition réactive est effectuée entre deux couches, deux par deux, à la sortie desdits canaux, lesdites deux couches étant alors imprégnées pour former un matériau bicouche imprégné, chaque matériau bicouche imprégné étant ensuite assemblé dans son épaisseur avec les autres pour former ledit matériau fibreux final imprégné. Dans une seconde variante, l'injection est effectuée à l'entrée de chaque canal.

Dans une troisième variante, l'injection est effectuée à l'entrée de chaque canal et entre lesdites couches lors de leur sortie de chaque canal.

Dans une quatrième variante, l'injection est effectuée à l'entrée de chaque canal et entre l'entrée et la sortie de chaque canal.

Dans une cinquième variante, l'injection est effectuée entre l'entrée et la sortie de chaque canal et entre lesdites couches lors de leur sortie de chaque canal.

Dans une sixième variante, l'injection est effectuée à l'entrée de chaque canal et entre l'entrée et la sortie de chaque canal et entre lesdites couches lors de leur sortie de chaque canal.

S'agissant des canaux et des couches

Le matériau fibreux est constitué d'un ensemble de rovings qui peut aller jusqu'à plusieurs milliers. Le matériau fibreux, avant imprégnation, est lors de son entrée dans ladite tête de pultrusion divisé dans son épaisseur en n couches. Il est bien évident qu'au moins un matériau fibreux rentre dans la tête de pultrusion et par conséquent, lorsque plusieurs matériaux fibreux rentrent dans la tête de pultrusion, chaque matériau fibreux est divisé dans son épaisseur en n couches.

Les constituants de la composition réactive sont mélangés dans un canal d'alimentation, à l'entrée ou en sortie dudit canal.

Les canaux sont chauffés à une température telle que la composition réactive présente une viscosité initiale à l'état fondu inférieure à 50 Pa.s, plus préférentiellement inférieure à 20 Pa.s, encore plus préférentiellement inférieure à 10 Pa.s, notamment inférieure à 5 Pa.s.

La viscosité initiale signifie la viscosité au temps t de mélange dans le canal d'alimentation de ladite composition réactive, c'est-à-dire que lorsque la composition réactive est introduite dans le canal d'alimentation, la viscosité initiale de ladite composition réactive est inférieure à 50 Pa.s, plus préférentiellement inférieure à 20 Pa.s, encore plus préférentiellement inférieure à 10 Pa.s, notamment inférieure à 5 Pa.s, ou lorsque ladite composition réactive est introduite entre lesdites couches à la sortie de chaque canal, chaque couche ayant circulé dans un canal qui est chauffé, ladite couche est alors elle-même à la température dudit canal et la viscosité initiale de ladite composition réactive est également inférieure à 50 Pa.s, plus préférentiellement inférieure à 20 Pa.s, encore plus préférentiellement inférieure à 10 Pa.s, notamment inférieure à 5 Pa.s.

La faible viscosité lors de l'injection de ladite composition réactive permet une imprégnation rapide de ladite couche par ladite composition réactive.

L'imprégnation débute au moment de l'injection et la polymérisation de ladite composition réactive débute dès le mélange des constituants, soit un peu de temps avant le début de l'imprégnation. L'imprégnation et la polymérisation, au moins partielle, sont donc concomitantes dans le procédé de l'invention.

L'imprégnation, en fonction de la position de l'injection se termine soit avant la réunification desdites couches si l'injection est effectuée à l'entrée et/ou entre l'entrée et la sortie de chaque canal soit après la réunification si l'injection se fait entre l'entrée et la sortie des canaux et/ou la sortie de chaque canal.

La réunification s'effectue bien évidemment en superposant lesdites couches imprégnées pour obtenir ledit matériau fibreux imprégné.

En fonction de la position de l'injection, l'imprégnation et la polymérisation, au moins partielle, étant concomitantes dans le procédé de l'invention, les dits précurseurs imprégnant ledit matériau fibreux sont donc au moins partiellement polymérisés après réunification desdites couches.

L'expression « au moins partiellement polymérisé » signifie que la masse moléculaire moyenne en nombre a augmenté d'un facteur au moins égal à 2, sans toutefois dépasser 10000, de préférence de 8000.

Après réunification, ledit matériau fibreux imprégné par lesdits précurseurs au moins partiellement polymérisés se situe toujours dans la tête de pultrusion, dans un canal unique disposant de son propre système de chauffe et d'éventuels embarrages, ce qui permet, au besoin, de finaliser l'imprégnation et/ou de poursuivre la polymérisation du mélange réactif.

Dans un mode de réalisation, le procédé tel que défini ci-dessus est caractérisé en ce que l'épaisseur maximum e de chaque couche est telle que le temps d'imprégnation de chaque couche est inférieur ou égal au temps nécessaire à une augmentation de la Mn de la composition réactive dans ladite couche, d'un facteur 5, préférentiellement d'un facteur 3, notamment d'un facteur 2.

Autrement dit, le procédé tel que défini ci-dessus est caractérisé en ce que l'épaisseur maximum e de chaque n couche est assujettie à la contrainte d'être inférieure ou égale à une borne maximale définie comme étant proportionnelle à la racine carrée de l'intégrale sur le temps de séjour $t_{sf}$ de la dite couche dans la filière de la fonction définie comme égale au ratio du produit de la perméabilité K par la pression fluide exercée sur la dite couche P par le produit de la fraction volumique $\alpha_f$ de la composition dans le milieu fibreux par la viscosité de la composition réactive $\mu$, la constante de proportionnalité C sus-citée étant inférieure ou égale à 14, en particulier inférieure ou égale à 7, notablement inférieure ou égale à 3, soit :

[Math 1]

$$e^2 \leq C^2 \int_0^{t_{sf}} \frac{K(s)P(s)}{\alpha_f(s)\mu(s)} ds$$

Par ailleurs, le canal est défini comme représentant le volume dans lequel chemine une couche de matériau fibreux en passant dans la tête d'imprégnation.

Si on considère un matériau fibreux choisit de manière aléatoire dans une des couches qui passent au travers de la tête d'imprégnation dans un canal, ce roving à tout instant de son parcours, est englobé dans le volume du canal, composé du volume dudit roving composant la couche et d'un volume libre. Sans ce volume libre, le matériau occuperait tout le volume du canal, conduisant à une friction très importante sur les parois et la rupture prématurée des rovings.

C'est donc ce volume libre, nécessaire au procédé, qui génère un temps de séjour de la composition réactive, dans la tête, différent du temps de séjour des rovings (directement lié à la vitesse de ligne). Dans un mode de réalisation, le temps de séjour moyen de la composition réactive dans la tête est au plus égal à 3, de préférence 2 et encore plus préféré 1,5 fois le temps de séjour dudit matériau fibreux. Cela permet d'éviter un blocage de la tête à cause d'une viscosité localement trop élevée qui bloque le mouvement des couches ou empêche leur bonne imprégnation.

Les canaux peuvent être de forme variés mais dans un mode de réalisation, ils sont de forme cylindrique ou non, en particulier cylindrique.

Un cylindre est une surface réglée dont les génératrices sont parallèles, c'est-à-dire une surface dans l'espace constituée de droites parallèles.

La surface réglée peut donc être carrée, rectangulaire, circulaire, elliptique (ou oblongue), conique, en U, en Té ...

L'épaisseur du canal est une dimension caractéristique de la base du cylindre et par conséquent, si la base est carrée, alors e= côté du carré. Si la base est un rectangle, alors une dimension caractéristique est le petit côté qui correspond à l'épaisseur. Si la base est circulaire, e = diamètre.

Si base elliptique, e= petit axe de l'ellipse ...

Dans un mode de réalisation, les canaux sont de forme cylindrique, et chaque canal ayant une épaisseur proportionnelle à l'épaisseur de chaque n couche, l'épaisseur de chaque canal est comprise entre de 2 et 3 fois l'épaisseur de chaque n couche, en particulier compris entre 1,5 et 2 fois l'épaisseur de chaque couche.

Avantageusement, les canaux sont de forme cylindrique avec une surface rectangulaire.

Des points de frottement ou zones de contact (ou points de contact) peuvent être placés alternativement au-dessus et au-dessous desdits matériaux fibreux dans chaque canal permettant ainsi l'épanouissement desdites couches de matériaux fibreux et/ou permettant une réduction du temps d'imprégnation car ces points de contact permettent une augmentation de la pression localement.

Ces points de contact permettent de générer un effet patin dans la zone de jonction embarrage/roving ce qui permet de réduire le temps de diffusion.

Toutefois le nombre et la surface des zones de contact doivent être limités et présenter un rayon de courbure suffisamment grand afin de ne pas conduire à la rupture desdits matériaux fibreux (rovings) par excès de tension sur les fibres.

Dans un mode de réalisation, chaque canal est équipé d'au moins une zone de contact présentant un rayon de courbure supérieur à d/eps rupture (d/$\varepsilon$), d étant le diamètre des fibres du matériau fibreux et eps étant la déformation à la rupture des fibres, placés alternativement au-dessus ou au-dessous des rovings lors de leur parcours dans la tête d'imprégnation pour provoquer et/ou maintenir un épanouissement du matériau fibreux, éventuellement préalablement initié en amont de la tête, sans endommager ledit matériau fibreux.

La déformation à la rupture des fibres est déterminée sur un cylindre de composite fibres de carbone/résine époxy, par mesure de l'allongement maximum à la rupture lors d'un essai de traction sur ce composite.

Il est considéré par la suite que la résistance de la résine en traction dans le sens des fibres est négligeable devant la résistance en traction des fibres et donc l'allongement à rupture du composite est celui des fibres.

ISO 527-4 :1997 ou EN 2561 Type B (1996) peuvent être utilisés.

Les rayons de courbure des zones de contact sur ledit matériau fibreux ne doivent pas être trop petits pour ne pas endommager le matériau fibreux.

Par conséquent, le rayon de courbure ne doit pas être inférieur ou égal à d/eps rupture (d/$\varepsilon$) sinon le matériau fibreux est endommagé.

Avantageusement, chaque canal présente jusqu'à 5 zones de contact.

Dans un mode de réalisation, chaque canal est dépourvu de zones de contact placés alternativement au-dessus ou au-dessous des rovings lors de leur parcours dans la tête d'imprégnation, en particulier lorsque les canaux sont de forme conique.

S'agissant du polymère thermoplastique

Ledit polymère thermoplastique est sélectionné parmi : les poly(aryl éthercétones) (PAEK), en particulier le poly(étheréthercétone) (PEEK) et le poly(éthercétonecétone) (PEKK) ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

Il est bien évident que le polymère thermoplastique doit être disponible sous forme de prépolymère réactif pour pouvoir imprégner ledit matériau fibreux.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Dans un mode de réalisation, ledit au moins polymère thermoplastique est sélectionné parmi les polyamides, notamment les polyamides aliphatiques, les polyamides cycloaliphatiques et les polyamides semi-aromatiques (polyphthalamides), le PVDF, le PEEK, PEKK, le PEI et un mélange PEKK et de PEI.

Dans un autre mode de réalisation, ledit au moins polymère thermoplastique est sélectionné parmi les polyamides, notamment les polyamides aliphatiques, les polyamides cycloaliphatiques et les polyamides semi-aromatiques (polyphthalamides).

Avantageusement, ledit polymère thermoplastique est un polymère dont la température de transition vitreuse est telle que Tg$\geq$ 80°C ou un polymère semi-cristallin dont la température de fusion Tf $\geq$ 150°C.

Avantageusement, ledit polymère thermoplastique est :

un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,

un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA MXDT/6T, un PA PA11/10T, un PA 5T/10T, un PA 11/5T/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, et les copolymères blocs, notamment polyamide/polyéther (PEBA).

T correspond à l'acide téréphtalique, MXD correspond à la m-xylylène diamine, MPMD correspond à la méthylpentaméthylène diamine et BAC correspond au bis(aminométhyl)cyclohexane.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'accélérer la fusion de la matrice polymère lorsqu'elle est chauffée, notamment par IR.

Il est bien évident que ces charges carbonées sont présentes initialement dans la composition réactive.

S'agissant du matériau fibreux

Concernant les fibres de constitution dudit matériau fibreux, ce sont notamment des fibres continues sélectionnées parmi les fibres de carbone, de verre, de carbure de silicium, à base de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

Avantageusement, le nombre de fibres dans ledit matériau fibreux pour des fibres de carbone est supérieur ou égal à 3K, en particulier supérieur ou égal à 6K, notamment supérieur ou égal à 12K. Avantageusement, le nombre de fibres dans ledit matériau fibreux pour des fibres de carbone est supérieur ou égal à 12K, en particulier choisi parmi 12K, 24K, 48K, 50K et 400K, notamment 12K, 24K, 48K et 50K.

Avantageusement, le grammage pour la fibre de verre est supérieur ou égal à 1200 Tex, notamment supérieur ou égal à 2400 Tex, supérieur ou égal à 4800 Tex.

Le Tex signifie que 1000 m de fil de base pèsent 1 gr.

Ces fibres de constitution dudit matériau fibreux peuvent être utilisées seules ou en mélanges. Ainsi, des fibres organiques peuvent être mélangées aux fibres minérales pour être imprégnées de polymère thermoplastique et former le matériau fibreux imprégné.

Les mèches de fibres organiques peuvent avoir plusieurs grammages. Elles peuvent en outre présenter plusieurs géométries.

Dans un mode de réalisation, le matériau fibreux est constitué par des fibres continues de carbone, de verre, de basalte ou à base de basalte, ou de carbure de silicium ou leur mélange, en particulier des fibres de carbone.

Les fibres du matériau fibreux peuvent être ensimées ou non.

Le terme « ensimée » désigne les traitements de surface appliqués aux matériaux fibreux lors de leur fabrication. Il peut aussi désigner un prétraitement fugace en préambule de l'étape de pré-imprégnation, qu'il soit fait directement en ligne avec l'imprégnation ou non.

Le terme « non ensimé » signifie que la fibre est soit non ensimée à l'origine et qu'elle n'a donc pas subi de traitement de surface, ou bien que la fibre a été dé-ensimée avant son utilisation.

Ils sont généralement de nature organique (type résine thermodurcissable ou thermoplastique) et très souvent formulés pour la pré-imprégnation des fibres de renfort de polymères à bas point de fusion Tf ou thermodurcissables à bas point de Tg.

Ces ensimages sont également utiles pour protéger les fibres sèches d'un endommagement lors d'un contact avec un système de guidage.

Le terme « non ensimé » signifie que la fibre est soit non ensimée à l'origine et qu'elle n'a donc pas subi de traitement de surface, ou bien que la fibre a été dé-ensimée avant son utilisation.

Dans le cas d'un matériau non ensimé, ledit matériau fibreux peut comprendre jusqu'à 0,1% en poids d'un matériau de nature organique (type résine thermodurcissable ou thermoplastique) dénommé ensimage.

Dans le cas d'un prétraitement fugace réalisé par l'imprégnateur par exemple en préambule de l'étape la pré-imprégnation des fibres de renfort, l'ensimage peut être un liquide organique comme de l'eau, un alcool à bas ou haut poids moléculaire (éthanol, méthanol, isopropanol par exemple), une cétone (acétone etc...) qui jouera le rôle d'ensimage fugace ; c'est-à-dire qu'il sera présent un court laps de temps en contact avec la fibre pour permettre sa manipulation à l'état « sec » (i.e. avant la pré-imprégnation) et qu'il sera ensuite extrait du matériau composite pour ne pas perturber les caractéristiques finales du composite.

Dans le cas d'un matériau ensimé, ledit matériau fibreux peut comprendre de 0,1% en poids à 2,5% en poids d'un matériau de nature organique (type résine thermodurcissable ou thermoplastique) dénommé ensimage.

Avantageusement, les fibres du matériau fibreux sont ensimées.

S'agissant du matériau fibreux imprégné

Le taux de fibres dans ledit matériau fibreux imprégné est compris de 45 à 80% en volume, de préférence de 50 à 65% en volume, notamment de 54 à 60%. Avantageusement, le taux de porosité dans ledit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus. Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

Etape de mise en forme

Optionnellement, une étape de mise en forme de la mèche ou desdites mèches parallèles dudit matériau fibreux imprégné est effectuée.

Dans un mode de réalisation, ledit procédé ci-dessus défini comprend de plus une étape de mise en forme de ladite mèche ou desdites mèches parallèles dudit matériau fibreux imprégné, au moyen d'au moins d'une calandre ou d'un conformateur chauffant ou refroidissant, sous forme d'un ruban unique unidirectionnel ou une pluralité de rubans parallèles, ou sous forme d'un profilé en U ou en Té ou sous forme d'un jonc ou d'une pluralité de joncs rubans parallèles unidirectionnels, ledit conformateur étant en contact ou non avec la dite tête d'imprégnation.

Avantageusement, l'étape de calandrage ou de conformation est réalisée au moyen d'une pluralité de calandres chauffantes ou refroidissantes, ou de conformateurs chauffant ou froids montées en parallèle et/ou en série par rapport au sens de défilement des mèches de fibres.

Un système de calandrage tel que décrit dans WO 2015/121583 peut être utilisé.

Avantageusement, elle est effectuée par calandrage au moyen d'au moins une calandre chauffante sous forme de ruban ou nappe unique unidirectionnelle ou d'une pluralité de rubans ou nappe parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulés par un système asservi.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Selon un autre mode de réalisation, une presse à bande est présente entre la tête de pultrusion et la calandre.

Selon encore un autre mode de réalisation, une série de fours de post polymérisation, est présente entre la tête de pultrusion et le dernier conformateur ou la dernière calandre.

Avantageusement, l'étape de mise en forme de ladite mèche ou desdites mèches parallèles dudit matériau fibreux imprégné, par calandrage au moyen d'au moins une calandre chauffante sous forme de ruban ou nappe unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Dans un mode de réalisation, ladite (ou lesdites) calandre(s) chauffante(s) est (sont) couplée(s) à un dispositif de chauffage complémentaire, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur.

S'agissant du ruban

Selon un autre aspect, la présente invention concerne un ruban unidirectionnel de matériau fibreux imprégné, en particulier ruban enroulé sur bobine, caractérisé en ce qu'il est obtenu par un procédé comprenant une étape de mise en forme tel que défini ci-dessus.

Dans un mode de réalisation, ledit ruban est caractérisé en ce que le polymère thermoplastique est un polyamide aliphatique choisi PA 6, PA 11, PA 12, PA 66, PA 46, PA 610, PA 612, PA 1010, PA 1012, PA 11/1010 ou PA 12/1010 ou un polyamide semi-aromatique tel qu'un PA MXD6 et un PA MXD10 ou choisi parmi PA 6/6T, PA 6I/6T, PA 66/6T, PA 11/10T, PA 5T/10T, PA 11/5T/10T, PA 11/6T/10T, PA MXDT/10T, PA MPMDT/10T, PA BACT/6T, PA BACT/10T et PA BACT/10T/6T, PA BACT/10T/11, PA BACT/6T/11, un PVDF, un PEEK, PEKK et un PEI ou un mélange de ceux-ci.

Selon un autre aspect, la présente invention concerne l'utilisation du procédé tel que défini ci-dessus, pour la fabrication de rubans calibrés adaptés à la fabrication de pièces composites en trois dimensions, par dépose automatique desdits rubans au moyen d'un robot.

Dans un mode de réalisation, ledit ruban de matériau fibreux imprégné, tel que défini ci-dessus est utilisé dans la fabrication de pièces composites en trois dimensions.

Dans un mode de réalisation, ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

Selon encore un autre aspect, la présente invention concerne une pièce composite en trois dimensions, caractérisée en ce qu'elle résulte de l'utilisation d'au moins un ruban unidirectionnel de matériau fibreux imprégné tel que défini ci-dessus.

D'autres buts, avantages et caractéristiques ressortiront de la description qui va suivre, donnée à titre d'exemple purement illustratif et faite en référence aux dessins annexés sur lesquels :

[Fig. 1] décrit la tête de pultrusion de l'exemple 1 comportant une filière, montée en tête d'équerre, comportant un système de séparation des fibres en plusieurs couches, au moyen d'un système d'embarrage plongé dans un réservoir de résine fondue : système adaptée à l'utilisation d'une résine non réactive

Le matériau fibreux est séparé en quatre mais dans une seule chambre d'imprégnation. Le matériau fibreux séparé ne circule donc pas dans un canal qui lui est propre.

[Fig. 2] présente une vue en coupe de la morphologie du matériau fibreux imprégné de l'exemple 1 (profilé pultrudé) avec la résine 11/10T/10T non réactive, en utilisant la tête de pultrusion décrite sur la figure 1.

[Fig. 3] présente la tête de pultrusion comportant une filière droite, sans volume mort et sans système de séparation des fibres en différentes couches (selon S. Lecorre, LTN, Nantes, International Journal of Microstructure and Materials Properties • Janvier 2012) de l'exemple 3.

[Fig. 4] présente la morphologie du matériau fibreux imprégné (profilé pultrudé) avec la tête de pultrusion décrite à la figure 3, avec une composition réactive de type 11/10T/10T.

[Fig. 5] présente la tête de pultrusion sans volume mort et avec système de séparation du matériau fibreux en différentes couches circulant donc dans un canal qui lui est propre de l'exemple 4 selon l'invention.

[Fig. 6] présente la morphologie d'un profilé réalisé avec la tête de pultrusion décrite à la figure 5 (exemple 4), avec une composition réactive de type 11 /6T/10T.

[Fig. 7] présente la morphologie d'un profilé réalisé avec la tête de pultrusion décrite à la figure 5 (exemple 5), avec une composition réactive de type BACT/10T.

EXEMPLES

Les exemples suivants illustrent de façon non limitative la portée de l'invention.

Exemple 1 : comparatif

Préparation d'un matériau fibreux imprégné de 11/6T/10T par pultrusion non réactive avec séparation des fibres en plusieurs couches mais dans une seule chambre d'imprégnation Le polymère est un 11/10T/10T de masse 10 000 g/mol. Sa Tg est de 115°C, sa viscosité à 300°C est de 70 Pa.s.

Le procédé de fabrication de la plaque composite est un procédé de pultrusion avec une imprégnation par voie fondue avec une tête de pultrusion comportant une filière, montée en tête d'équerre.

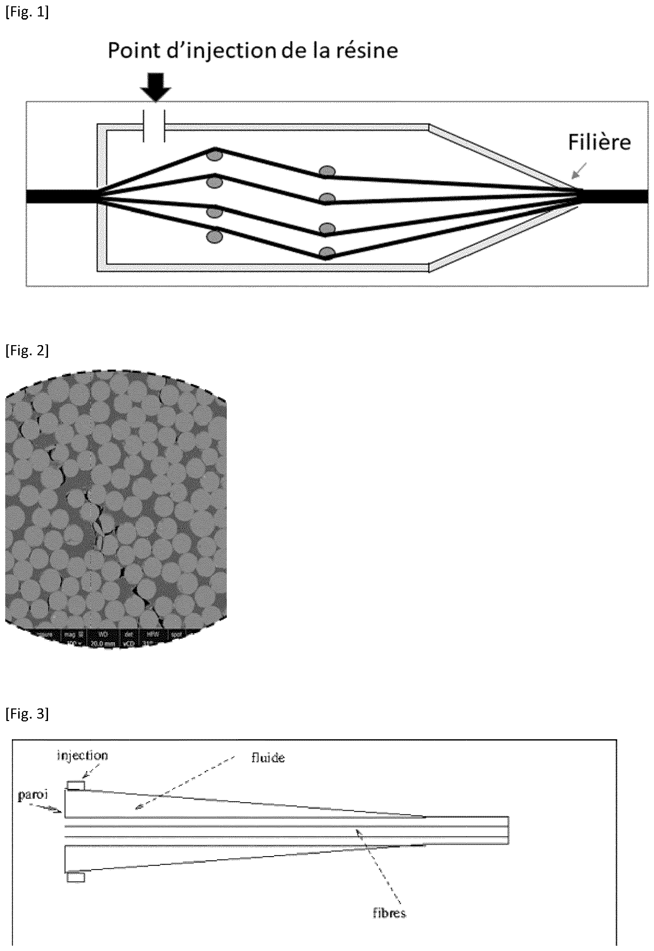

La tête de pultrusion comporte un réservoir de résine dans lequel les fibres sont séparées en 4 couches au moyen d'un système d'embarrages, comme décrit sur la figure 1.

Cette tête de pultrusion présente des volumes morts importants.

La totalité du renfort fibreux présente une épaisseur de 1mm. Après séparation, chacune des couches de fibres présente une épaisseur d'environ $250\mu m$.

Le polymère est introduit sous forme de granulés, préalablement compoundés avec un agent stabilisant thermiquement, dans une extrudeuse qui alimente la tête d'équerre.

La température à laquelle les fibres ont été imprégnées était de 300°C.

La vitesse de la ligne était de 0,5 m/mn.

La fibre utilisée est la fibre de verre Hypertex de 3B SE4535

Le taux de fibre était de 60% en volume.

Le profilé obtenu est une plaque d'une largeur de 200mm et d'une épaisseur de 1mm.

*Résultat*

La morphologie du profilé obtenu est indiquée sur la figure 2 : l'imprégnation des fibres est excellente, cependant la vitesse de la ligne est faible et ne peut pas être accélérée si l'on souhaite conserver cette qualité d'imprégnation, ce qui rend ce procédé de pultrusion peu productif ave ce type de résine. En outre, la relative faible masse du polymère utilisée pour limiter sa viscosité à 300°C, compte tenu de sa Tg élevée, empêche d'atteindre des propriétés à rupture très élevées. Ainsi, la contrainte à rupture en flexion reste inférieure à 1000MPa, ce qui est faible, compte tenu du taux de fibres (cf tableau 1). Ceci est la conséquence d'une trop faible masse molaire de la résine, laquelle a été volontairement limitée à 10 000g/mol pour disposer d'un polymère suffisamment fluide pour être compatible avec le procédé non réactif à 300°C.

En outre, on observe sur la figure 3, que cette faible masse molaire conduit à une microfissuration du profilé pultrudé sous l'effet des contraintes résiduelles qui apparaissent lors de la cristallisation de la résine et du refroidissement du profilé pultrudé.

Exemple 2 : Comparatif

Préparation d'un matériau fibreux imprégné de 11/6T/10T par pultrusion réactive avec séparation des fibres en plusieurs couches mais dans une seule chambre d'imprégnation

La même tête de pultrusion que dans l'exemple 1 est utilisée mais avec une composition réactive composée de deux prépolymères réactifs de type 11/6T/10T, de masse molaire Mn de 2500g/mol, présentant une viscosité à l'état fondu à 300°C comprise 1 Pa.s, l'un étant terminé diCOOH, l'autre diNH2. Après polymérisation, la résine présente une Tg de 115°C.

La fusion des prépolymères est faite séparément au moyen de 2 extrudeuses.

Les pré-polymères sont introduits sous forme de granulés, dans une extrudeuse qui alimente la tête d'équerre.

La température à laquelle les fibres ont été imprégnées était de 300°C.

La vitesse de la ligne était de 0.8 m/mn.

La fibre utilisée est la fibre de verre Hypertex de 3B SE4535

Le taux de fibre était de 58% en volume.

Le profilé obtenu est une plaque d'une largeur de 200mm et d'une épaisseur de 1mm.

Le protocole de démarrage de la tête de pultrusion consiste à utiliser un seul prépolymère pour imprégner les fibres, jusqu'à atteindre un régime stabilisé sur la ligne. On introduit alors le deuxième prépolymère que l'on mélange à 300°C avec le premier prépolymère, au moyen d'un mélangeur statique de type Sulzer, juste avant leur introduction dans la tête de pultrusion.

Dans cette tête de pultrusion, les fibres sont séparées en 4 couches comme dans l'exemple 1. La totalité du renfort fibreux présente une épaisseur de 1mm. Après séparation, chacune des couches de fibres présente une épaisseur d'environ 250$\mu$m.

*Résultat*

L'imprégnation des fibres est excellente mais la fabrication du profilé s'arrête peu de temps après le démarrage, car les fibres se bloquent dans la tête. Cela est dû à la présence de volumes morts trop importants dans la tête de pultrusion, dans lesquels la composition réactive réside trop longtemps et donc polymérise, conduisant à une viscosification très importante de la résine et au blocage des fibres en une dizaine de minutes, c'est-à-dire pour un temps voisin du temps de polymérisation de la composition réactive et du temps nécessaire à remplacer dans les zones mortes, le prépolymère initial par la composition réactive. Ce procédé n'est donc pas robuste et donc pas viable.

Exemple 3 : Comparatif

Préparation d'un matériau fibreux imprégné de 11/6T/10T par pultrusion réactive sans séparation de couches

La tête de pultrusion utilisée est présentée sur la figure 3, est similaire au design de la tête de pultrusion décrite dans les travaux du Pr Steven Lecorre au LTN, à Nantes, International Journal of Microstructure and Materials Properties · Janvier 2012). Cette tête de pultrusion se distingue par le fait que les fibres occupent un volume proche du volume de la tête, c'est à dire qu'il n'y a pas de volume morts importants. Par contre il n'y a pas de séparation des fibres en plusieurs couches, alors que l'épaisseur du profilé final est de 1 mm. Le taux de fibres est de 60% en volume. L'épaisseur du renfort fibreux est de 1mm avant imprégnation et l'épaisseur de l'entrefer de la tête de pultrusion est de 2,5mm. La vitesse de pultrusion est de 0,8 m/mn.

La composition réactive utilisée est composée de deux prépolymères réactifs de type 11/6T/10T, de masse de 2500g/mol et présentant une viscosité à l'état fondu à 300°C de 1 Pa.s, l'un étant terminé diCOOH, l'autre diNH2. Après polymérisation, la résine présente une Tg de 115°C.

La fusion des prépolymères est faite séparément au moyen de 2 extrudeuses.

Les pré-polymères sont introduits sous forme de granulés, dans une extrudeuse qui alimente la tête d'équerre.

La température à laquelle les fibres ont été imprégnées était de 300°C.

La vitesse de la ligne était de 0,8 m/mn.

La fibre utilisée est la fibre de verre Hypertex de 3B SE4535

Le taux de fibre était de 59% en volume.

Le profilé obtenu est une plaque d'une largeur de 200mm et d'une épaisseur de 1mm.

Le protocole de démarrage de la tête de pultrusion consiste à utiliser un seul prépolymère pour imprégner les fibres, jusqu'à atteindre un régime stabilisé sur la ligne. On introduit alors le deuxième prépolymère que l'on mélange à 300°C avec le premier prépolymère, au moyen d'un mélangeur statique de type Sulzer, juste avant leur introduction dans la tête de pultrusion.

*Résultat :*

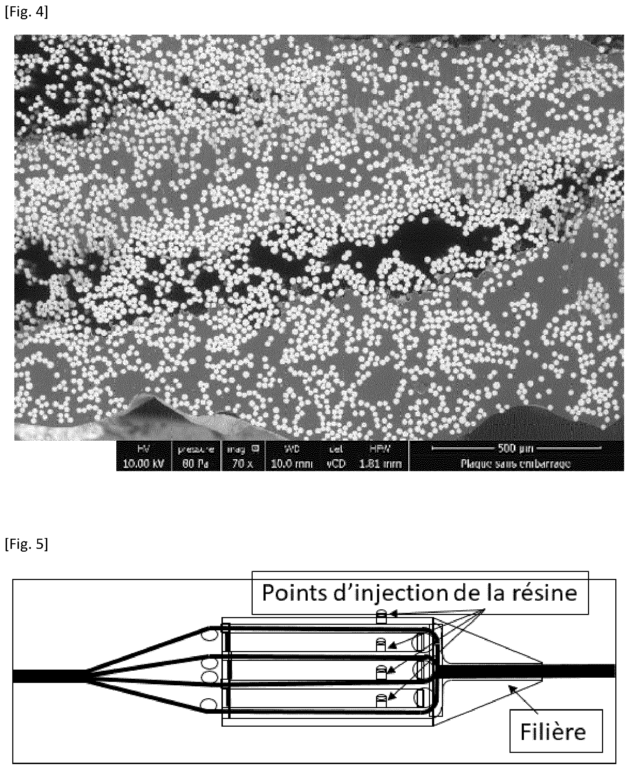

L'absence de volumes morts trop importants dans la tête de pultrusion permet au procédé de pultrusion de se poursuivre pendant au moins 2 heures sans blocage, alors que le temps de réaction complet de la composition réactive à 300°C est de moins de 5mn. Par contre l'absence de séparation en couches du renfort fibreux ne permet pas une bonne imprégnation des fibres, malgré la faible viscosité des prépolymères utilisés (cf figure 4).

Ce procédé n'est donc pas compatible avec la chimie réactive à base de polymère de haute Tg.

Exemple 4 : Invention

Préparation d'un matériau fibreux imprégné de 11/6T/10T par pultrusion réactive avec séparation de couches

La tête de pultrusion utilisée est présentée sur la figure 5. Cette tête de pultrusion se distingue par le fait que les fibres occupent un volume proche du volume de la tête, c'est à dire qu'il n'y a pas de volume morts importants. En outre, il y a séparation des fibres en plusieurs couches, alors que l'épaisseur du profilé final est de 1 mm. Le taux de fibres est de 60% en volume. Ainsi, l'épaisseur totale du renfort fibreux est de 1 mm avant imprégnation et en l'absence de tension, l'épaisseur de l'entrefer de chaque canal utilisé pour chacune des couches est de $350\,\mu$m, tandis que chacune des couches de fibres, sous tension présente une épaisseur proche de $250\,\mu$m.

La vitesse de pultrusion est de 1,5 m/mn.

La composition réactive utilisée est composée de deux prépolymères réactifs de type 11/6T/10T, de masse de 2500g/mol et présentant une viscosité à l'état fondu à 300°C de 1 Pa.s, l'un étant terminé diCOOH, l'autre diNH2. Après polymérisation, la résine présente une Tg de 115°C.

La fusion des prépolymères est faite séparément au moyen de 2 extrudeuses.

Les pré-polymères sont introduits sous forme de granulés, dans une extrudeuse qui alimente la tête d'équerre.

La température à laquelle les fibres ont été imprégnées était de 300°C.

La vitesse de la ligne était de 1,5 m/mn.

La fibre utilisée est la fibre de verre Hypertex de 3B SE4535

Le taux de fibre était de 57% en volume.

Le profilé obtenu est une plaque d'une largeur de 200mm et d'une épaisseur de 1mm.

Le protocole de démarrage de la tête de pultrusion consiste à utiliser un seul prépolymère pour imprégner les fibres, jusqu'à atteindre un régime stabilisé sur la ligne. On introduit alors le deuxième prépolymère que l'on mélange à 300°C avec le premier prépolymère, au moyen d'un mélangeur statique de type Sulzer, juste avant leur introduction dans la tête de pultrusion.

A la sortie de la tête de pultrusion, on a disposé en ligne 3 fours IR de 2m qui permettent de post-polymériser la résine à l'état fondu, à une température de 300°C. Compte tenu de la vitesse de ligne de 1.5m/mn, le temps de polymérisation était de 4mn. La mise en forme finale de la plaque s'effectue au moyen d'un conformateur froid, régulé à 200°C, placé en sortie du dernier four de polymérisation.

*Résultats :*

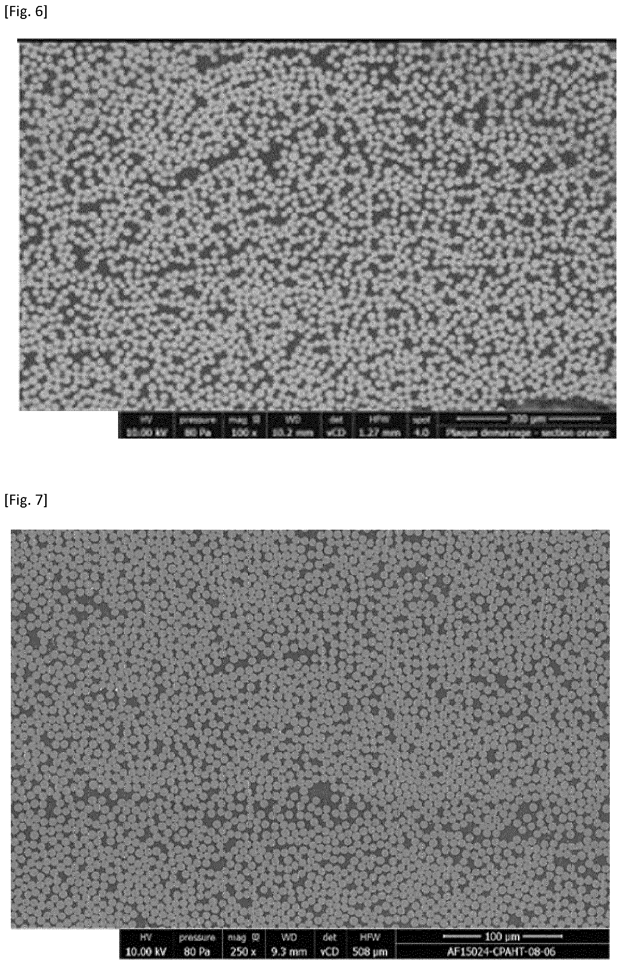

L'absence de volumes morts trop importants dans la tête de pultrusion permet au procédé de pultrusion de se poursuivre pendant au moins deux heures sans blocage, alors que le temps de réaction complet de la composition réactive à 300°C est de moins de 5mn. La séparation en couches du renfort fibreux permet une bonne imprégnation des fibres (cf figure 6). En outre, la faible viscosité des prépolymères utilisés permet en outre une vitesse de pultrusion de 1,5m/mn, ce qui est un facteur de productivité de ce procédé.

Le prélèvement d'un échantillon de plaque fait directement en sortie de la filière de pultrusion a permis de mesurer la masse molaire de la résine à cette étape du procédé et la Mn trouvée était de 5200 g/mol (mesure faite par RMN), ce qui confirme le fait que la polymérisation dans la tête de pultrusion est très partielle, ce qui limite d'autant les risques de surpression et de dégradation des fibres, voire de blocage complet de la tête de pultrusion.

Le fait d'utiliser un procédé réactif permet, après l'étape de post polymérisation et le passage dans le dernier conformateur froid, permet d'obtenir un composite présentant d'excellente propriétés mécaniques : dans ce cas, on mesure en flexion, selon norme ISO 14125:1998, une contrainte à rupture > 1000 MPa (cf tableau 1). Ceci traduit le fait qu'une grande masse molaire a été atteinte dans le profilé pultrudé et cela s'accompagne également de la disparition des microfissures (fig 6) qui étaient présentent dans le profilé fait avec le procédé non réactif (fig 3).

En outre, le fait d'utiliser une chimie réactive a permis d'imprégner les fibres à grande vitesse (cad au-delà de 1m/mn) à relativement faible température (cad 300°C). A titre de comparaison et pour bien montrer l'intérêt de l'invention, un polymère de masse équivalente à la masse obtenue après post polymérisation, aurait dû être chauffé à plus de 360°C pour être suffisamment fluide pour permettre une imprégnation des fibres au moyen d'un procédé non réactif. Il aurait fallu en outre disposer d'une stabilisation thermique très efficace pour éviter sa dégradation, ce qui reste compliqué avec les PPA. Pour finir, le coût de l'équipement de pultrusion augmente beaucoup au-delà de 330°C.

Ce procédé réactif est donc compatible avec la chimie réactive à base de polymère de haute Tg.

Exemple 5 : Invention

Préparation d'un matériau fibreux imprégné de BACT/10T par pultrusion réactive avec séparation de couches

La tête de pultrusion utilisée est présentée sur la figure 5. Cette tête de pultrusion se distingue par le fait que les fibres occupent un volume proche du volume de la tête, c'est à dire qu'il n'y a pas de volume morts importants. En outre, il y a séparation des fibres en plusieurs couches, alors que l'épaisseur du profilé final est de 1 mn. Le taux de fibres est de 60% en volume. Ainsi, l'épaisseur totale du renfort fibreux est de 1.2mm avant imprégnation et en l'absence de tension, l'épaisseur de l'entrefer de chaque canal utilisé pour chacune des couches est de 350$\mu$m, tandis que chacune des couches de fibres, sous tension présente une épaisseur proche de 250$\mu$m.

La vitesse de pultrusion est de 1,5 m/mn.

La composition réactive utilisée est composée de deux prépolymères réactifs de type BACT/10T, de masse de 2800g/mol et présentant une viscosité à l'état fondu à 320°C de 4 Pa.s, l'un étant terminé diCOOH, l'autre diNH2. Après polymérisation, la résine présente une Tg de 140°C.

La fusion des prépolymères est faite séparément au moyen de 2 extrudeuses.

Les pré-polymères sont introduits sous forme de granulés, dans une extrudeuse qui alimente la tête d'équerre.

La température à laquelle les fibres ont été imprégnées était de 320°C.

La vitesse de la ligne était de 1,5 m/mn.

La fibre utilisée est la fibre de verre Hypertex de 3B SE4535

Le taux de fibre était de 58% en volume.

Le profilé obtenu est une plaque d'une largeur de 200mm et d'une épaisseur de 1mm.

Le protocole de démarrage de la tête de pultrusion consiste à utiliser un seul prépolymère pour imprégner les fibres, jusqu'à atteindre un régime stabilisé sur la ligne. On introduit alors le deuxième prépolymère que l'on mélange à 320°C avec le premier prépolymère, au moyen d'un mélangeur statique de type Sulzer, juste avant leur introduction dans la tête de pultrusion.

A la sortie de la tête de pultrusion, on a disposé en ligne 3 fours IR de 2m qui permettent de post-polymériser la résine à l'état fondu, à une température de 320°C. Compte tenu de la vitesse de ligne de 1,5m/mn, le temps de polymérisation était de 4mn. La mise en forme finale de la plaque s'effectue au moyen d'un conformateur froid, régulé à 200°C, placé en sortie du dernier four de polymérisation.

*Résultats :*

L'absence de volumes morts trop importants dans la tête de pultrusion permet au procédé de pultrusion de se poursuivre pendant au moins deux heures sans blocage, alors que le temps de réaction complet de la composition réactive à 320°C est de moins de 5mn. La séparation en couches du renfort fibreux permet une bonne imprégnation des fibres (cf figure 7). En outre, la faible viscosité des prépolymères utilisés permet en outre une vitesse de pultrusion de 1,5m/mn, ce qui est un facteur de productivité de ce procédé.

Le prélèvement d'un échantillon de plaque fait directement en sortie de la filière de pultrusion a permis de mesurer la masse molaire de la résine à cette étape du procédé et la Mn trouvée était de 6200 g/mol (mesure faite par RMN), ce qui confirme le fait que la polymérisation dans la tête de pultrusion est très partielle, ce qui limite d'autant les risques de surpression et de dégradation des fibres, voire de blocage complet de la tête de pultrusion.

Le fait d'utiliser un procédé réactif permet, après l'étape de post polymérisation et le passage dans le dernier conformateur froid, d'obtenir un composite présentant d'excellente propriétés mécaniques : dans ce cas, on mesure en flexion, selon norme ISO 14125:1998, une contrainte à rupture > 1000 MPa (cf tableau 1).

En outre, le fait d'utiliser une chimie réactive a permis d'imprégner les fibres à grande vitesse (cad au-delà de 1m/mn) à relativement faible température (cad 320°C). A titre de comparaison et pour bien montrer l'intérêt de l'invention, un polymère de masse équivalente à la masse obtenue après post polymérisation, aurait dû être chauffé à plus de 360°C pour être suffisamment fluide pour permettre une imprégnation des fibres au moyen d'un procédé non réactif. Il aurait fallu en outre disposer d'une stabilisation thermique très efficace pour éviter sa dégradation, ce qui reste compliqué avec les PPA. Pour finir, le coût de l'équipement de pultrusion augmente beaucoup au-delà de 330°C.

Ce procédé réactif est donc compatible avec la chimie réactive à base de polymère de haute Tg.

[Tableau 1]

|  | Taux de fibre (% vol) | Contrainte à rupture en flexion (MPa) |
|---|---|---|
| Exemple 1 | 60 | 940 |
| Exemple 2 | 58 | X (non testé, porosité trop importante) |
| Exemple 3 | 59 | X (non testé, porosité trop importante) |
| Exemple 4 | 57 | 1350 |
| Exemple 5 | 58 | 1410 |

Exemple 5 : Détermination du taux de porosité l'écart relatif entre densité théorique et densité expérimentale (méthode générale)

a) Les données requises sont :

- La densité de la matrice thermoplastique
- La densité des fibres
- Le grammage du renfort :
  masse linéique (g/m) par exemple pour une tape % de pouce (issu d'un seul rowing) masse surfacique (g/m$^2$) par exemple pour une tape plus large ou un tissu

b) Mesures à réaliser :

Le nombre d'échantillons doit être au minimum de 30 pour que le résultat soit représentatif du matériau étudié. Les mesures à réaliser sont :

- La dimension des échantillons prélevés:

  Longueur (si masse linéique connue).
  Longueur et largeur (si masse surfacique connue).

- La densité expérimentale des échantillons prélevés :
  Mesures de masse dans l'air et dans l'eau.
- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001.

La mesure du taux de fibres de carbone peut être déterminée selon ISO 14127 :2008. Détermination du taux de fibres massique théorique :

a) Détermination du taux de fibres massique théorique :

[Math 2]

$$\%Mf_{th} = \frac{m_l.L}{Me_{air}}$$

Avec

ml la masse linéique de la tape,

L la longueur de l'échantillon et

Meair la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

[Math 3]

$$d_{th} = \frac{1}{\frac{1-\%Mf_{th}}{d_m} + \frac{\%Mf_{th}}{d_f}}$$

Avec dm et df les densités respectives de la matrice et des fibres.

La densité théorique ainsi calculée est la densité accessible s'il n'y a aucune porosité dans les échantillons.

c) Evaluation de la porosité :

La porosité est alors l'écart relatif entre densité théorique et densité expérimentale.

**Revendications**

1. Procédé de fabrication d'au moins un matériau fibreux imprégné comprenant un matériau fibreux (ou mèches) en fibres continues et au moins un polymère thermoplastique de température de transition vitreuse Tg supérieure ou égale à 40°C, en particulier supérieure ou égale à 80°C, de préférence comprise de 100 à 200°C, plus préférentiellement comprise de 110 à 200°C, ou une température de fusion Tf inférieure ou égale à 400°C, en particulier inférieure ou égale à 350°C, notamment inférieure ou égale à 290°C, la température de transition vitreuse Tg et la température de fusion Tf étant mesurées en DSC selon la norme ISO 11357-2: 2013 et ISO 11357-3 : 2013 respectivement,
   **caractérisé en ce que** ledit procédé comprend une étape d'imprégnation dans une tête de pultrusion dudit au moins un matériau fibreux par injection d'une composition réactive à l'état fondu comprenant au moins un précurseur dudit polymère thermoplastique en présence dudit matériau fibreux,
   ledit au moins un matériau fibreux étant lors de son entrée dans ladite tête de pultrusion divisé dans son épaisseur en n couches, en particulier d'épaisseurs sensiblement égales, n étant compris de 2 à 20, en particulier de 2 à 10, plus particulièrement de 2 à 5, notamment égal à 4,
   chaque couche circulant dans ladite tête de pultrusion dans un canal qui lui est propre,
   l'injection de ladite composition réactive étant effectuée dans chaque canal et/ou entre lesdites couches lors de leur réunification à la sortie de chaque canal,
   ledit canal étant chauffé à une température telle que la composition réactive présente une viscosité initiale à l'état fondu inférieure à 50 Pa.s, plus préférentiellement inférieure à 20 Pa.s, encore plus préférentiellement inférieure à 10 Pa.s, notamment inférieure à 5 Pa.s, la viscosité à l'état fondu étant mesurée par rhéologie oscillatoire à une température Tf ≤ T ≤ Tf +50°C pour un polymère semi-cristallin ou Tg + 220°C pour un polymère amorphe, à 10 rad/sec sous balayage d'azote avec 5% de déformation sur un appareil Physica MCR301 entre deux plans parallèles de 25 mm de diamètre, l'imprégnation débutant au moment de l'injection et se terminant avant ou après la réunification desdites couches par superposition pour former ledit au moins un matériau fibreux final imprégné dans lequel lesdits précurseurs dudit polymère thermoplastique sont au moins partiellement polymérisés.

2. Procédé selon la revendication 1, **caractérisé en ce que** l'épaisseur maximum e de chaque couche est telle que le temps d'imprégnation de chaque couche est inférieur ou égal au temps nécessaire à une augmentation de la masse moléculaire moyenne en nombre (Mn), déterminée par chromatographie d'exclusion stérique ou par RMN, de la composition réactive dans ladite couche, d'un facteur 5, préférentiellement d'un facteur 3, notamment d'un facteur 2.

3.  Procédé selon l'une des revendications 1 ou 2, **caractérisé en ce que** le temps de séjour moyen de la composition réactive dans la tête est au plus égal à 3, de préférence 2 et encore plus préféré 1,5 fois le temps de séjour dudit matériau fibreux.

4.  Procédé selon l'une des revendications 1 à 3, **caractérisé en ce que** les canaux sont de forme cylindrique ou non, en particulier cylindrique.

5.  Procédé selon la revendication 4, **caractérisé en ce que** les canaux sont de forme cylindrique, chaque canal ayant une épaisseur proportionnelle à l'épaisseur de chaque n couche, l'épaisseur de chaque canal est compris entre de 2 et 3 fois l'épaisseur de chaque n couche, en particulier compris entre 1,5 et 2 fois l'épaisseur de chaque couche.

6.  Procédé selon l'une des revendications 1 à 5, **caractérisé en ce que** chaque canal est équipé d'au moins une zone de contact présentant un rayon de courbure supérieur à d/eps rupture (d/$\varepsilon$), d étant le diamètre des fibres du matériau fibreux et eps étant la déformation à la rupture des fibres, placés alternativement au-dessus ou au-dessous des matériaux fibreux (rovings) lors de leur parcours dans la tête d'imprégnation pour provoquer et/ou maintenir un épanouissement du matériau fibreux, éventuellement préalablement initié en amont de la tête, sans endommager ledit matériau fibreux.

7.  Procédé selon l'une des revendications 1 à 4, **caractérisé en ce que** chaque canal est dépourvu de zones de contact placés alternativement au-dessus ou au-dessous des matériaux fibreux (rovings) lors de leur parcours dans la tête d'imprégnation, en particulier lorsque les canaux sont de forme conique.

8.  Procédé selon l'une des revendications 1 à 7, **caractérisé en ce que** l'injection de ladite composition réactive est effectuée entre deux couches, deux par deux, à la sortie desdits canaux, lesdites deux couches étant alors imprégnées pour former un matériau bicouche imprégné, chaque matériau bicouche imprégné étant ensuite assemblé dans son épaisseur avec les autres pour former ledit matériau fibreux final imprégné.

9.  Procédé selon l'une des revendications 1 à 8, **caractérisé en ce que** ledit polymère thermoplastique est un prépolymère réactif susceptible de réagir sur lui-même ou avec un autre prépolymère, en fonction des fins de chaîne portées par ledit prépolymère, ou encore avec un allongeur de chaîne.

10. Procédé selon l'une des revendications 1 à 9, **caractérisé en ce que** ledit au moins polymère thermoplastique est sélectionné parmi : les poly(aryl éthercétones) (PAEK), en particulier le poly(étheréthercétone) (PEEK) et le poly(éthercétonecétone) (PEKK) ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

11. Procédé selon l'une des revendications 1 à 10, **caractérisé en ce que** ledit au moins polymère thermoplastique est sélectionné parmi les polyamides, notamment les polyamides aliphatiques, les polyamides cycloaliphatiques et les polyamides semi-aromatiques (polyphthalamides), le PVDF, le PEEK, PEKK, le PEI et un mélange PEKK et de PEI.

12. Procédé selon l'une des revendications 1 à 11, **caractérisé en ce que** le taux de fibres dans ledit matériau fibreux imprégné est compris de 45 à 80% en volume, de préférence de 50 à 65% en volume, notamment de 54 à 65%.

13. Procédé selon l'une des revendications 1 à 12, **caractérisé en ce que** le taux de porosité dans ledit matériau fibreux pré-imprégné est inférieure à 10%, notamment inférieur à 5%, en particulier inférieur à 2%.

14. Procédé selon l'une des revendications 1 à 13, **caractérisé en ce qu'**il comprend de plus une étape de mise en forme de ladite mèche ou desdites mèches parallèles dudit matériau fibreux imprégné, au moyen d'au moins d'une calandre ou d'un conformateur chauffant ou refroidissant, sous forme d'un ruban unique unidirectionnel ou une pluralité de rubans parallèles, ou sous forme d'un profilé en U ou en Té ou sous forme d'un jonc ou d'une pluralité de joncs rubans parallèles unidirectionnels, ledit conformateur étant en contact ou non avec la dite tête d'imprégnation.

15. Procédé selon la revendication 14, **caractérisé en ce que** l'étape de calandrage ou de conformation est réalisée au moyen d'une pluralité de calandres chauffantes ou refroidissantes, ou de conformateurs chauffant ou froids montées en parallèle et/ou en série par rapport au sens de défilement des mèches de fibres.

16. Procédé selon l'une des revendications 14 ou 15, **caractérisé en ce que** ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

17. Procédé selon l'une des revendications 1 à 16, **caractérisé en ce qu'**une presse à bande est présente entre la tête de pultrusion et la calandre.

18. Procédé selon l'une des revendications 1 à 17, **caractérisé en ce qu'**une série de fours de post polymérisation, est présente entre la tête de pultrusion et le dernier conformateur ou la dernière calandre.

19. Procédé selon l'une des revendications 1 à 18, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

20. Procédé selon l'une des revendications 1 à 19, **caractérisé en ce que** ledit matériau fibreux comprend des fibres continues sélectionnées parmi les fibres de carbone, de verre, de carbure de silicium, à base de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

21. Ruban unidirectionnel de matériau fibreux imprégné, en particulier ruban enroulé sur bobine, **caractérisé en ce qu'**il est obtenu par un procédé tel que défini selon l'une des revendications 14 à 20.

22. Ruban selon la revendication 21, **caractérisé en ce que** le polymère thermoplastique est un polyamide aliphatique choisi PA 6, PA 11, PA 12, PA 66, PA 46, PA 610, PA 612, PA 1010, PA 1012, PA 11/1010 ou PA 12/1010 ou un polyamide semi-aromatique tel qu'un PA MXD6 et un PA MXD10 ou choisi parmi PA 6/6T, PA 6I/6T, PA 66/6T, PA 11/10T, PA 5T/10T, PA 11/5T/10T, PA 11/6T/10T, PA MXDT/10T, PA MPMDT/10T, PA BACT/6T, PA BACT/10T et PA BACT/10T/6T, PA BACT/10T/11, PA BACT/6T/11, un PVDF, un PEEK, PEKK et un PEI ou un mélange de ceux-ci.

23. Utilisation du procédé tel que défini selon l'une des revendications 14 à 20, pour la fabrication de rubans calibrés adaptés à la fabrication de pièces composites en trois dimensions, par dépose automatique desdits rubans au moyen d'un robot.

24. Utilisation du ruban de matériau fibreux imprégné, tel que défini selon la revendication 21 ou 22, dans la fabrication de pièces composites en trois dimensions.

25. Utilisation selon la revendication 23 ou 24, **caractérisée en ce que** ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

**26.** Pièce composite en trois dimensions, **caractérisée en ce qu'**elle résulte de l'utilisation d'au moins un ruban unidirectionnel de matériau fibreux imprégné tel que défini selon l'une des revendications 21 à 22.

**Patentansprüche**

**1.** Verfahren zur Herstellung mindestens eines imprägnierten Fasermaterials, umfassend ein Fasermaterial (oder Faserbänder) aus Endlosfasern und mindestens ein thermoplastisches Polymer mit einer Glasübergangstemperatur Tg größer oder gleich 40 °C, besonders größer oder gleich 80 °C, vorzugsweise im Bereich von 100 bis 200 °C, mehr bevorzugt im Bereich von 110 bis 200 °C, oder einer Schmelztemperatur Tf kleiner oder gleich 400 °C, besonders kleiner oder gleich 350 °C, insbesondere kleiner oder gleich 290 °C, wobei die Glasübergangstemperatur Tg und die Schmelztemperatur Tf jeweils mittels DSC nach der Norm ISO 11357-2: 2013 und ISO 11357-3: 2013 gemessen werden,
dadurch gekennzeichnet, dass das Verfahren einen Schritt des Imprägnierens des mindestens einen Fasermaterials in einem Pultrusionskopf durch Einspritzen einer reaktiven Zusammensetzung in geschmolzenem Zustand, die mindestens einen Vorläufer des thermoplastischen Polymers umfasst, in Gegenwart des Fasermaterials umfasst, wobei das mindestens eine Fasermaterial bei seinem Eintritt in den Pultrusionskopf in seiner Dicke in n Schichten, besonders mit im Wesentlichen gleichen Dicken, unterteilt ist, wobei n im Bereich von 2 bis 20, besonders 2 bis 10, vor allem von 2 bis 5, insbesondere gleich 4 ist, wobei jede Schicht in dem Pultrusionskopf in einem ihr eigenen Kanal zirkuliert, wobei das Einspritzen der reaktiven Zusammensetzung in jeden Kanal und/oder zwischen die Schichten bei ihrer Wiederzusammenführung am Ausgang jedes Kanals durchgeführt wird,
wobei der Kanal auf eine solche Temperatur erwärmt wird, dass die reaktive Zusammensetzung eine Anfangsviskosität in geschmolzenem Zustand von weniger als 50 Pa.s, mehr bevorzugt weniger als 20 Pa.s, noch mehr bevorzugt weniger als 10 Pa.s, insbesondere weniger als 5 Pa.s aufweist, wobei die Viskosität in geschmolzenem Zustand durch Oszillationsrheologie bei einer Temperatur Tf ≤ T ≤ Tf + 50 °C für ein teilkristallines Polymer oder Tg + 220 °C für ein amorphes Polymer mit 10 rad/s unter Stickstoffspülung mit 5 % Verformung auf einem Physica MCR301-Gerät zwischen zwei parallelen Ebenen mit 25 mm Durchmesser gemessen wird, wobei die Imprägnierung zum Zeitpunkt des Einspritzens beginnt und vor oder nach Wiederzusammenführung der Schichten durch Übereinanderlegen endet, um das mindestens eine imprägnierte fertige Fasermaterial zu bilden, in dem die Vorläufer des thermoplastischen Polymers mindestens teilweise polymerisiert sind.

**2.** Verfahren nach Anspruch 1, **dadurch gekennzeichnet, dass** die maximale Dicke e jeder Schicht so ist, dass die Imprägnierzeit jeder Schicht kleiner oder gleich der Zeit ist, die für eine Erhöhung des zahlenmittleren Molekulargewichts (Mn), bestimmt durch sterische Ausschlusschromatographie oder durch NMR, der reaktiven Zusammensetzung in der Schicht um einen Faktor 5, vorzugsweise um einen Faktor 3, insbesondere um einen Faktor 2, erforderlich ist.

**3.** Verfahren nach einem der Ansprüche 1 oder 2, **dadurch gekennzeichnet, dass** die durchschnittliche Verweilzeit der reaktiven Zusammensetzung in dem Kopf höchstens gleich dem 3-fachen, vorzugsweise dem 2-fachen und noch mehr bevorzugt dem 1,5-fachen der Verweilzeit des Fasermaterials ist.

**4.** Verfahren nach einem der Ansprüche 1 bis 3, **dadurch gekennzeichnet, dass** die Kanäle von zylindrischer oder nicht zylindrischer, besonders zylindrischer Form sind.

**5.** Verfahren nach Anspruch 4, **dadurch gekennzeichnet, dass** die Kanäle von zylindrischer Form sind, wobei jeder Kanal eine Dicke aufweist, die proportional zu der Dicke jeder n-Schicht ist, wobei die Dicke jedes Kanals zwischen dem 2- und 3-fachen der Dicke jeder n-Schicht, besonders zwischen dem 1,5- und 2-fachen der Dicke jeder Schicht, liegt.

**6.** Verfahren nach einem der Ansprüche 1 bis 5, **dadurch gekennzeichnet, dass** jeder Kanal mit mindestens einer Kontaktzone mit einem Krümmungsradius größer als d/eps Bruch (d/$\varepsilon$) ausgestattet ist, wobei d der Durchmesser der Fasern des Fasermaterials und eps die Bruchverformung der Fasern ist, die bei ihrem Durchlauf durch den Imprägnierkopf abwechselnd über oder unter den Fasermaterialien (Rovings) platziert werden, um eine Ausbreitung des Fasermaterials zu bewirken und/oder aufrechtzuerhalten, die gegebenenfalls zuvor stromaufwärts des Kopfes eingeleitet wurde, ohne das Fasermaterial zu beschädigen.

7. Verfahren nach einem der Ansprüche 1 bis 4, **dadurch gekennzeichnet, dass** jeder Kanal frei von, bei ihrem Durchlauf durch den Imprägnierkopf, abwechselnd über oder unter den Fasermaterialien (Rovings) platzierten Kontaktzonen ist, besonders wenn die Kanäle konisch geformt sind.

8. Verfahren nach einem der Ansprüche 1 bis 7, **dadurch gekennzeichnet, dass** das Einspritzen der reaktiven Zusammensetzung zwischen zwei Schichten paarweise am Ausgang der Kanäle durchgeführt wird, wobei die zwei Schichten dann imprägniert werden, um ein imprägniertes Doppelschichtmaterial zu bilden, wobei jedes imprägnierte Doppelschichtmaterial anschließend in seiner Dicke mit den anderen zusammengefügt wird, um das fertige imprägnierte Fasermaterial zu bilden.

9. Verfahren nach einem der Ansprüche 1 bis 8, **dadurch gekennzeichnet, dass** das thermoplastische Polymer ein reaktives Vorpolymer ist, das in der Lage ist, mit sich selbst oder mit einem anderen Vorpolymer, abhängig von den von dem Vorpolymer getragenen Kettenenden, oder auch mit einem Kettenverlängerer zu reagieren.

10. Verfahren nach einem der Ansprüche 1 bis 9, **dadurch gekennzeichnet, dass** das mindestens eine thermoplastische Polymer ausgewählt ist aus: Poly(aryletherketonen) (PAEK), besonders Poly(etheretherketon) (PEEK) und Poly(etherketonketon) (PEKK); Polyarylsulfonen, besonders Polyphenylensulfonen (PPSU); Polyarylsulfiden, besonders Polyphenylensulfiden (PPS); Polyamiden (PA), besonders halbaromatischen Polyamiden (Polyphthalamiden), gegebenenfalls modifiziert durch Harnstoffeinheiten; PEBA, Polyacrylaten, besonders Polymethylmethacrylat (PMMA); Polyolefinen, besonders Polypropylen, Polymilchsäure (PLA), Polyvinylalkohol (PVA) und fluorierten Polymeren, besonders Polyvinylidenfluorid (PVDF) oder Polytetrafluorethylen (PTFE) oder Polychlortrifluorethylen (PCTFE); und deren Mischungen, insbesondere einer Mischung aus PEKK und PEI, vorzugsweise von 90-10 Gew.-% bis 60-40 Gew.-%, besonders von 90-10 Gew.-% bis 70-30 Gew.-%.

11. Verfahren nach einem der Ansprüche 1 bis 10, **dadurch gekennzeichnet, dass** das mindestens thermoplastische Polymer ausgewählt ist aus Polyamiden, insbesondere aliphatischen Polyamiden, cycloaliphatischen Polyamiden und halbaromatischen Polyamiden (Polyphthalamiden), PVDF, PEEK, PEKK, PEI und einer Mischung PEKK und PEI.

12. Verfahren nach einem der Ansprüche 1 bis 11, **dadurch gekennzeichnet, dass** der Fasergehalt in dem imprägnierten Fasermaterial im Bereich von 45 bis 80 Vol.-%, vorzugsweise von 50 bis 65 Vol.-%, insbesondere von 54 bis 65 Vol.-% liegt.

13. Verfahren nach einem der Ansprüche 1 bis 12, **dadurch gekennzeichnet, dass** die Porositätsrate in dem Prepreg-Fasermaterial weniger als 10 %, insbesondere weniger als 5 %, besonders weniger als 2 % beträgt.

14. Verfahren nach einem der Ansprüche 1 bis 13, **dadurch gekennzeichnet, dass** es ferner einen Schritt der Formgebung des Faserbands oder der parallelen Faserbänder des imprägnierten Fasermaterials mittels mindestens eines Kalanders oder eines wärmenden oder kühlenden Formgebers in Form eines einzelnen unidirektionalen Bands oder einer Vielzahl paralleler Bänder oder in Form eines U- oder T-Profils oder in Form eines Stabs oder einer Vielzahl von unidirektionalen parallelen Stäbe-Bändern umfasst, wobei der Formgeber in Kontakt mit dem Imprägnierkopf ist oder nicht.

15. Verfahren nach Anspruch 14, **dadurch gekennzeichnet, dass** der Kalandrier- oder Formgebungsschritt mittels einer Vielzahl von wärmenden oder kühlenden Kalandern oder wärmendem oder kalten Formgebern durchgeführt wird, die bezüglich der Laufrichtung der Faserbänder parallel und/oder in Reihe montiert sind.

16. Verfahren nach einem der Ansprüche 14 oder 15, **dadurch gekennzeichnet, dass** der (oder die) wärmende(n) Kalander ein integriertes Erwärmungssystem durch Induktion oder durch Mikrowellen, vorzugsweise durch Mikrowellen, gekoppelt an das Vorhandensein kohlenstoffhaltiger Füllstoffe in dem thermoplastischen Polymer oder der Mischung thermoplastischer Polymere umfasst (umfassen).

17. Verfahren nach einem der Ansprüche 1 bis 16, **dadurch gekennzeichnet, dass** zwischen dem Pultrusionskopf und dem Kalander eine Bandpresse vorhanden ist.

18. Verfahren nach einem der Ansprüche 1 bis 17, **dadurch gekennzeichnet, dass** zwischen dem Pultrusionskopf und dem letzten Formgeber oder dem letzten Kalander eine Reihe von Nachpolymerisationsöfen vorhanden ist.

**19.** Verfahren nach einem der Ansprüche 1 bis 18, **dadurch gekennzeichnet, dass** das thermoplastische Polymer des Weiteren kohlenstoffhaltige Füllstoffe, besonders Ruß oder kohlenstoffhaltige Nanofüllstoffe, vorzugsweise gewählt aus kohlenstoffhaltigen Nanofüllstoffen, besonders Graphenen und/oder Kohlenstoffnanoröhrchen und/oder Kohlenstoffnanofibrillen oder deren Mischungen, umfasst.

**20.** Verfahren nach einem der Ansprüche 1 bis 19, **dadurch gekennzeichnet, dass** das Fasermaterial Endlosfasern umfasst, ausgewählt aus Kohlenstoff-, Glas-, Siliciumcarbid-, Basaltbasis-, Siliciumdioxidfasern, Naturfasern, besonders Leinen oder Hanf, Lignin, Bambus, Sisal, Seide, oder cellulosischen, besonders Viskose, oder amorphen thermoplastischen Fasern mit einer Glasübergangstemperatur Tg höher als die Tg des Polymers oder der Mischung aus Polymeren, wenn letzteres amorph ist, oder höher als die Tf des Polymers oder der Mischung aus Polymeren, wenn letzteres teilkristallin ist, oder thermoplastischen teilkristallinen Fasern mit einer Schmelztemperatur Tf höher als die Tg des Polymers oder der Mischung aus Polymeren, wenn letzteres amorph ist, oder höher als die Tf des Polymers oder der Mischung aus Polymeren, wenn letzteres teilkristallin ist, oder einer Mischung aus zwei oder mehr der Fasern, vorzugsweise einer Mischung aus Kohlenstoff-, Glas- oder Siliciumcarbidfasern, besonders Kohlenstofffasern.

**21.** Unidirektionales Band aus imprägniertem Fasermaterial, besonders auf eine Spule gewickeltes Band, **dadurch gekennzeichnet, dass** es durch ein Verfahren erhalten wird, wie gemäß einem der Ansprüche 14 bis 20 definiert.

**22.** Band nach Anspruch 21, **dadurch gekennzeichnet, dass** das thermoplastische Polymer ein aliphatisches Polyamid, gewählt aus PA 6, PA 11, PA 12, PA 66, PA 46, PA 610, PA 612, PA 1010, PA 1012, PA 11/1010 oder PA 12/1010 oder ein halbaromatisches Polyamid wie ein PA MXD6 und ein PA MXD10 oder gewählt aus PA 6/6T, PA 6I/6T, PA 66/6T, PA 11/10T, PA 5T/10T, PA 11/5T/10T, PA 11/6T/10T, PA MXDT/10T, PA MPMDT/10T, PA BACT/6T, PA BACT/10T und PA BACT/10T/6T, PA BACT/10T/11, PA BACT/6T/11, ein PVDF, ein PEEK, PEKK und ein PEI oder eine Mischung von diesen ist.

**23.** Verwendung des Verfahrens wie nach einem der Ansprüche 14 bis 20 definiert, zur Herstellung kalibrierter Bänder, die zur Herstellung dreidimensionaler Verbundteile geeignet sind, durch automatisches Ablegen der Bänder mittels eines Roboters.

**24.** Verwendung des Bands aus imprägniertem Fasermaterial, wie nach einem der Ansprüche 21 oder 22 definiert, bei der Herstellung dreidimensionaler Verbundteile.

**25.** Verwendung nach Anspruch 23 oder 24, **dadurch gekennzeichnet, dass** sich die Herstellung der Verbundteile auf die Bereiche Transport, besonders Automobil, Öl und Gas, besonders Offshore, Gasspeicherung, Luftfahrt, Seefahrt, Schiene; erneuerbare Energien, besonders Wind, Gezeiten, Energiespeichervorrichtungen, Sonnenkollektoren; Wärmeschutzplatten; Sport und Freizeit, Gesundheit und Medizin und Elektronik bezieht.

**26.** Dreidimensionales Verbundteil, **dadurch gekennzeichnet, dass** es aus der Verwendung von mindestens einem unidirektionalen Band aus imprägniertem Fasermaterial resultiert, wie gemäß einem der Ansprüche 21 bis 22 definiert.

**Claims**

**1.** A method for manufacturing an impregnated fibrous material comprising a fibrous material (or rovings) made of continuous fibers and at least one thermoplastic polymer having a glass transition temperature Tg of greater than or equal to 40°C, in particular greater than or equal to 80°C, preferably of from 100 to 200°C, more preferentially of from 110 to 200°C, or a melting point Tm of less than or equal to 400°C, in particular less than or equal to 350°C, especially less than or equal to 290°C, the glass transition temperature Tg and the melting point Tm being measured by DSC according to standard ISO 11357-2: 2013 and ISO 11357-3: 2013, respectively, **characterized in that** said method comprises a step of impregnating, in a pultrusion head, said at least one fibrous material by injecting a reactive composition in the molten state comprising at least one precursor of said thermoplastic polymer in the presence of said fibrous material, said at least one fibrous material, during the entry thereof into said pultrusion head, being divided in its thickness into n layers, in particular of substantially equal thicknesses, n being from 2 to 20, in particular from 2 to 10, more particularly from 2 to 5, especially equal to 4, each layer circulating in said pultrusion head in a channel of its own, said reactive composition being injected into each channel and/or between said layers when they are brought back together at the outlet of each channel,

said channel being heated to a temperature such that the reactive composition has an initial viscosity in the molten state of less than 50 Pa.s, more preferentially of less than 20 Pa.s, even more preferentially of less than 10 Pa.s, especially of less than 5 Pa.s, the viscosity in the molten state being measured by oscillatory rheology at a temperature $Tm \leq T \leq Tm +50°C$ for a semi-crystalline polymer or $Tg + 220°C$ for an amorphous polymer, at 10 rad/sec under nitrogen flushing with 5% deformation on a Physica MCR301 apparatus between two parallel planes 25 mm in diameter, the impregnation starting at the time of the injection and ending before or after said layers are brought back together by superposition in order to form said at least one final impregnated fibrous material wherein said precursors of said thermoplastic polymer are at least partially polymerized.

2. The method according to claim 1, **characterized in that** the maximum thickness e of each layer is such that the impregnation time of each layer is less than or equal to the time required to increase the number-average molecular weight (Mn), determined by size exclusion chromatography or by NMR, of the reactive composition in said layer by a factor of 5, preferentially by a factor of 3, especially by a factor of 2.

3. The method according to one of claims 1 or 2, **characterized in that** the mean residence time of the reactive composition in the head is at most equal to 3, preferably 2 and even more preferably 1.5 times the residence time of said fibrous material.

4. The method according to one of claims 1 to 3, **characterized in that** the channels are cylindrical or not cylindrical in shape, in particular cylindrical.

5. The method according to claim 4, **characterized in that** the channels are cylindrical in shape, each channel having a thickness proportional to the thickness of each n layer, the thickness of each channel is between 2 and 3 times the thickness of each n layer, in particular between 1.5 and 2 times the thickness of each layer.

6. The method according to one of claims 1 to 5, **characterized in that** each channel is fitted with at least one contact zone having a radius of curvature of greater than d/breaking eps (d/$\varepsilon$), d being the diameter of the fibers of the fibrous material and eps being the deformation at break of the fibers, placed alternately above or below the fibrous materials (rovings) during their travel in the impregnation head in order to cause and/or maintain spreading of the fibrous material, optionally initiated beforehand upstream of the head, without damaging said fibrous material.

7. The method according to one of claims 1 to 4, **characterized in that** each channel is devoid of contact zones placed alternately above or below the fibrous materials (rovings) during their travel in the impregnation head, in particular when the channels are conical in shape.

8. The method according to one of claims 1 to 7, **characterized in that** said reactive composition is injected between two layers, in pairs, at the outlet of said channels, said two layers then being impregnated in order to form an impregnated bilayer material, each impregnated bilayer material subsequently being assembled in its thickness with the others in order to form said final impregnated fibrous material.

9. The method according to one of claims 1 to 8, **characterized in that** said thermoplastic polymer is a reactive pre-polymer capable of reacting with itself or with another pre-polymer, based on the chain ends borne by said pre-polymer, or else with a chain extender.

10. The method according to one of claims 1 to 9, **characterized in that** said at least one thermoplastic polymer is selected from: polyaryl ether ketones (PAEK), in particular polyether ether ketone (PEEK) and polyether ketone ketone (PEKK); polyaryl sulfones, in particular polyphenylene sulfones (PPSU); polyarylsulfides, in particular polyphenylene sulfides (PPS); polyamides (PA), in particular semi-aromatic polyamides (polyphthalamides) optionally modified by urea units; PEBAs, polyacrylates, in particular polymethyl methacrylate (PMMA); polyolefins, in particular polypropylene, polylactic acid (PLA), polyvinyl alcohol (PVA), and fluorinated polymers, in particular polyvinylidene fluoride (PVDF) or polytetrafluoroethylene (PTFE) or polychlorotrifluoroethylene (PCTFE); and mixtures thereof, especially a mixture of PEKK and PEI, preferably from 90-10% by weight to 60-40% by weight, in particular from 90-10% by weight to 70-30% by weight.

11. The method according to one of claims 1 to 10, **characterized in that** said at least thermoplastic polymer is selected from polyamides, especially aliphatic polyamides, cycloaliphatic polyamides and semi-aromatic polyamides (polyphthalamides), PVDF, PEEK, PEKK, PEI and a mixture of PEKK and PEI.

**12.** The method according to one of claims 1 to 11, **characterized in that** the fiber content in said impregnated fibrous material is from 45 to 80% by volume, preferably from 50 to 65% by volume, especially from 54 to 65%.

**13.** The method according to one of claims 1 to 12, **characterized in that** the porosity level in said pre-impregnated fibrous material is less than 10%, especially less than 5%, in particular less than 2%.

**14.** The method according to one of claims 1 to 13, **characterized in that** it further comprises a step of shaping said parallel roving(s) of said impregnated fibrous material, by means of at least one calender or a heating or cooling forming machine, in the form of a single unidirectional ribbon or a plurality of parallel ribbons, or in the form of a U-shaped or T-shaped profiled element or in the form of a ring or of a plurality of parallel unidirectional ribbon rings, said forming machine being or not being in contact with said impregnation head.

**15.** The method according to claim 14, **characterized in that** the calendering step or shaping step is carried out using a plurality of heating or cooling calenders, mounted in parallel and/or in series relative to the direction of passage of the fiber rovings.

**16.** The method according to one of claims 14 or 15, **characterized in that** said heating calender(s) comprise(s) an integrated induction or microwave heating system, preferably microwave, coupled with the presence of carbon-based fillers in said thermoplastic polymer or mixture of thermoplastic polymers.

**17.** The method according to one of claims 1 to 16, **characterized in that** a belt press is present between the pultrusion head and the calender.

**18.** The method according to one of claims 1 to 17, **characterized in that** a series of post-polymerization furnaces is present between the pultrusion head and the last forming machine or the last calender.

**19.** The method according to one of claims 1 to 18, **characterized in that** said thermoplastic polymer further comprises carbon-based fillers, in particular carbon black or carbon-based nanofillers, preferably selected from carbon-based nanofillers, in particular graphenes and/or carbon nanotubes and/or carbon nanofibrils or mixtures thereof.

**20.** The method according to one of claims 1 to 19, **characterized in that** said fibrous material comprises continuous fibers selected from carbon, glass, silicon carbide, basalt-based or silica fibers, natural fibers, in particular flax or hemp, lignin, bamboo, sisal, silk, or cellulose fibers, in particular viscose, or amorphous thermoplastic fibers with a glass transition temperature Tg greater than the Tg of said polymer or of said mixture of polymers when the latter is amorphous or greater than the Tm of said polymer or of said mixture of polymers when the latter is semi-crystalline, or the semi-crystalline thermoplastic fibers with a melting point Tm greater than the Tg of said polymer or of said mixture of polymers when the latter is amorphous or greater than the Tm of said polymer or of said mixture of polymers when the latter is semi-crystalline, or a mixture of two or more of said fibers, preferably a mixture of carbon, glass or silicon carbide fibers, in particular carbon fibers.

**21.** A unidirectional ribbon of impregnated fibrous material, in particular ribbon wound on a spool, **characterized in that** it is obtained by a method as defined according to one of claims 14 to 20.

**22.** The ribbon according to claim 21, **characterized in that** the thermoplastic polymer is an aliphatic polyamide selected from PA 6, PA 11, PA 12, PA 66, PA 46, PA 610, PA 612, PA 1010, PA 1012, PA 11/1010 or PA 12/1010 or a semi-aromatic polyamide such as a PA MXD6 and a PA MXD10 or selected from PA 6/6T, PA 6I/6T, PA 66/6T, PA 11/10T, PA 5T/10T, PA 11/5T/10T, PA 11/6T/10T, PA MXDT/10T, PA MPMDT/10T, PA BACT/6T, PA BACT/10T and PA BACT/10T/6T, PA BACT/10T/11, PA BACT/6T/11, a PVDF, a PEEK, PEKK and a PEI or a mixture thereof.

**23.** A use of the method as defined according to one of claims 14 to 20 for the manufacture of calibrated ribbons suitable for the manufacture of three-dimensional composite parts, by the automated laying of said ribbons by means of a robot.

**24.** A use of the ribbon of impregnated fibrous material, as defined according to claim 21 or 22, in the manufacture of three-dimensional composite parts.

**25.** The use according to claim 23 or 24, **characterized in that** said manufacture of said composite parts relates to the fields of transportation, in particular the automotive field, of oil and gas, in particular offshore oil and gas, of gas storage, aeronautics, naval, railways; of renewable energies, in particular wind energy, hydro turbines, energy storage devices, solar panels; of thermal protection panels; of sports and leisure, of health and of medical and of electronics.

26. A three-dimensional composite part, **characterized in that** it results from the use of at least one unidirectional ribbon of impregnated fibrous material as defined according to one of claims 21 to 22.

[Fig. 1]

Point d'injection de la résine

Filière

[Fig. 2]

[Fig. 3]

injection

fluide

paroi

fibres

[Fig. 4]

[Fig. 5]

Points d'injection de la résine

Filière

[Fig. 6]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013086258 A
- EP 0581642 A
- EP 0739924 A
- EP 0581641 A
- EP 0425341 A
- WO 2010130930 A
- EP 1505099 A
- WO 2015121583 A

**Littérature non-brevet citée dans la description**

- **S. LECORRE.** *International Journal of Microstructure and Materials Properties,* Janvier 2012
- **PR STEVEN LECORRE.** *International Journal of Microstructure and Materials Properties,* Janvier 2012